Europäisches Patentamt

European Patent Office

Office européen des brevets

(19)

(11) **EP 1 277 372 B1**

(12) **FASCICULE DE BREVET EUROPEEN**

(45) Date de publication et mention
de la délivrance du brevet:
**05.01.2005 Bulletin 2005/01**

(51) Int Cl.7: **H04R 3/00**, G10L 11/02,
G10L 21/02

(21) Numéro de dépôt: **01929698.7**

(22) Date de dépôt: **25.04.2001**

(86) Numéro de dépôt international:
**PCT/FR2001/001262**

(87) Numéro de publication internationale:
**WO 2001/084881 (08.11.2001 Gazette 2001/45)**

(54) **SYSTEME DE RECEPTION POUR ANTENNE MULTICAPTEUR**

EMPFANGSSYSTEM FÜR EINE MEHRFACHEMPFÄNGER -ANTENNE

RECEPTION SYSTEM FOR MULTISENSOR ANTENNA

(84) Etats contractants désignés:
**DE ES GB IT NL**

(30) Priorité: **28.04.2000 FR 0005601**

(43) Date de publication de la demande:
**22.01.2003 Bulletin 2003/04**

(73) Titulaire: **FRANCE TELECOM SA
75015 Paris (FR)**

(72) Inventeurs:
• **MARRO, Claude
F-22220 Plouguiel (FR)**
• **HAMON, François
F-35000 Rennes (FR)**

(74) Mandataire: **Maillet, Alain
Cabinet le Guen & Maillet,
5, Place Newquay,
B.P. 70250
35802 Dinard Cedex (FR)**

(56) Documents cités:
**EP-A- 0 386 765          DE-A- 19 818 608**

• **MARRO C ET AL: "ANALYSIS OF NOISE
REDUCTION AND DEREVERBERATION
TECHNIQUES BASED ON MICROPHONE
ARRAYS WITH POSTFILTERING" IEEE
TRANSACTIONS ON SPEECH AND AUDIO
PROCESSING,US,IEEE INC. NEW YORK, vol. 6,
no. 3, 1 mai 1998 (1998-05-01), pages 240-259,
XP000785354 ISSN: 1063-6676 cité dans la
demande**
• **ZELINSKI R: INTERNATIONAL CONFERENCE
ON ACOUSTICS, SPEECH & SIGNAL
PROCESSING. ICASSP,US,NEW YORK, IEEE,
vol. CONF. 13, 11 avril 1988 (1988-04-11), pages
2578-2581, XP000042077 cité dans la demande**
• **LLEIDA E ET AL: "ROBUST CONTINUOUS
SPEECH RECOGNITION SYSTEM BASED ON A
MICROPHONE ARRAY" IEEE INTERNATIONAL
CONFERENCE ON ACOUSTICS, SPEECH AND
SIGNAL PROCESSING,US,NEW YORK, NY:
IEEE, vol. CONF. 23, 12 mai 1998 (1998-05-12),
pages 241-244, XP000854560 ISBN:
0-7803-4429-4**

**Description**

La présente invention concerne un système de réception pour antenne multicapteur. Les capteurs peuvent être de type quelconque, notamment des transducteurs acoustiques, des hydrophones, des microphones, des antennes élémentaires pour ondes radioélectriques. Suivant le type de capteur envisagé, l'invention peut s'appliquer à la prise de son (téléconférence, visioconférence, téléphonie mains-libres etc.) à l'imagerie biomédicale, à l'imagerie ou la télédétection sous-marine, les radiocommunications, la télédétection atmosphérique etc.

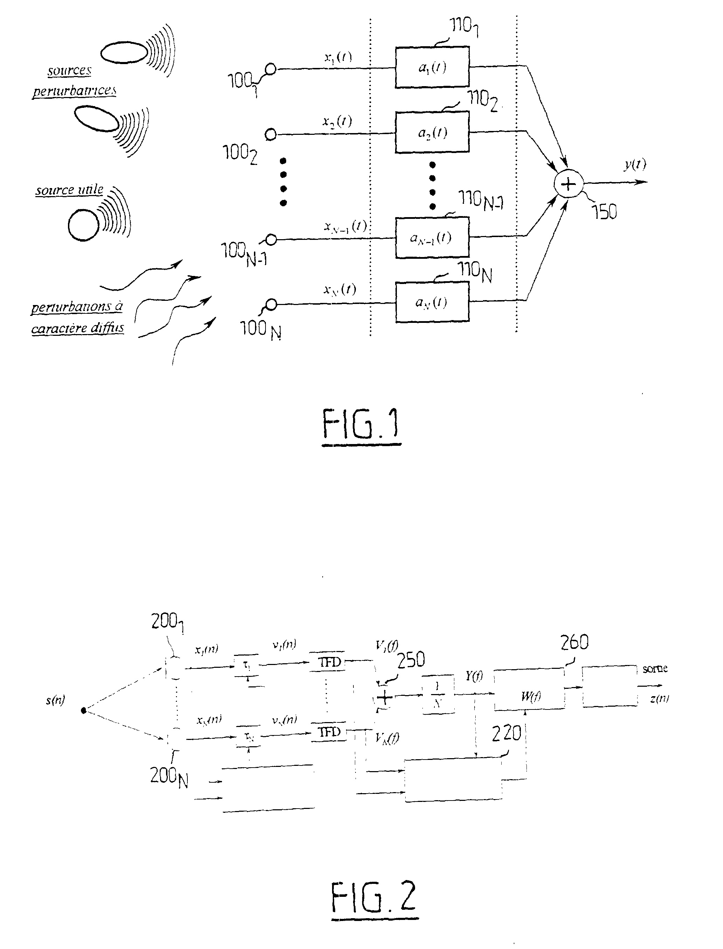

La figure 1 représente une antenne multicapteur telle que connue de l'état de la technique Une telle antenne est constituée de $N$ capteurs $100_i$ ($i$ = 1,..,$N$) destinés au prélèvement des signaux perturbés $x_i(t)$ ($i$ = 1,..,$N$), $t$ étant l'indice temporel. Ces signaux sont filtrés par des filtres de voie $110_i$ ($i$ = 1,..,$N$) dont le rôle est de contrôler plusieurs aspects de l'antennage :

♦  Ils assurent une directivité donnée à l'antenne (e.g. ouverture du lobe principal. remontées des lobes secondaires, réjection dans des directions non-désirées, etc.).

♦  Ils permettent le pointage de l'antenne dans la direction de la source utile.

Le dernier étage délivre le signal de sortie de l'antenne $y(t)$ par sommation des signaux issus des filtres de voie au moyen d'un sommateur (150). La réalisation de ces filtres dépend notamment du positionnement géométrique des capteurs et de la nature des signaux à traiter.

Selon le domaine d'application, les antennes peuvent présenter des performances limitées. Notamment, la réduction des perturbations peut s'avérer insuffisante. Cette réduction, qui est un élément caractéristique de l'efficacité d'une antenne est appelée gain en *RSB* de l'antenne (*RSB* pour *rapport signal à bruit*). Sous le terme "bruit", on entend ici l'ensemble des signaux perturbateurs que l'antenne est destinée à réduire.

Afin d'augmenter le rapport signal à bruit, il est connu d'effectuer un post-filtrage du signal de sortie d'antenne. Le principe d'un tel post-filtrage est illustré en Fig 2

La combinaison d'une antenne multicapteur et d'un post-filtrage a été décrite pour la première fois par J.B. Allen en 1977 [Allen 77]. Cette technique a été proposée pour déréverbérer le signal de parole pour la prise de son éloignée en milieu réverbérant. La prise de son est réalisée par deux microphones et le traitement complet (estimation du post-filtre, application des retards et post-filtrage), basé sur la fonction de cohérence, est réalisé dans le domaine fréquentiel. En 1988, R. Zelinski a étendu ces techniques à une prise de son mettant en jeu plus de capteurs [Zelinski 88]. Dans [Simmer 92a], K.U. Simmer a proposé une expression de la fonction de transfert du post-filtre selon une approche du type "filtrage de Wiener". L'analyse qui suit décrit l'ensemble de ces méthodes. Une description plus détaillée est donnée dans [Marro 98].

Considérant le post-filtrage illustré en Fig. 2 dans le cadre d'une application de prise de son, les signaux perturbés $x_i(n)$ sont captés par une antenne composée de $N$ microphones ($200_i$) i=1,..,N :

$$x_i(n) = s(n\text{-}\tau_{hi}) + n_i(n), \qquad i = 1,...,N \qquad (1)$$

où $s$ désigne le signal de parole désiré et $n_i$ le bruit au niveau du capteur $200_i$. Du fait du formalisme orienté "traitement numérique du signal", $n$ représente ici l'indice temporel en temps discret $\tau_{hi}$ est le retard introduit par la propagation entre le son émis par la source $s(n)$ et celui parvenant au microphone $200_i$. Pour réaliser la remise en phase de ce signal (i.e. le pointage de l'antenne dans la direction de la source), l'antenne est pointée dans la direction du locuteur désiré à l'aide de filtres $r_i(n)$ :

$$v_i(n) = r_i(n)^*x_i(n), \qquad i=1,...,N \qquad (2)$$

où $v_i(n)$ est une version retardée de $x_i(n)$. Comme l'indique la Fig. 2, chaque signal microphonique $x_i(n)$ subit un retard $\tau_i$ (retard effectivement réalisé par le filtre $r_i(n)$). Les signaux $V_i(f)$ sont une représentation dans le domaine fréquentiel des signaux $v_i(n)$, $f$ désignant la fréquence. Cette opération est réalisée par les blocs TFD (pour *Transformée de Fourier Discrète)*. Le multiplieur *1/N* appliqué après sommation des voies est un terme de normalisation qui assure un gain unité de l'antenne pour le signal utile. Celui-ci, qui fait partie intégrante de l'antenne, délivre le signal de sortie d'antenne $Y(f)$. Le post-filtre (260) de fonction de transfert $W(f)$, estimée à partir des signaux de voie $V_i(f)$ et/ou de la sortie d'antenne $Y(f)$ (la façon dont $W(f)$ calculé est décrite plus loin), est appliqué à $Y(f)$; Le dernier bloc de synthèse permet le retour du signal de sortie dans le domaine temporel.

Le filtre optimal $W_{opt}$, dont l'entrée correspond à la sortie $y$ de l'antenne, est obtenu en minimisant l'erreur quadratique moyenne entre le signal désiré *s* et estimé $\hat{s}$. L'expression de ce filtre optimal peut s'écrire à partir du signal utile *s* et du bruit moyen $\bar{n}$ en sortie d'antenne [Simmer 92a] :

$$W_{opt}(f) = \frac{\Phi_{ss}(f)}{\Phi_{ss}(f) + \Phi_{\overline{nn}}(f)} \tag{3}$$

où $\Phi_{ss}(f)$ et $\Phi_{\overline{nn}}(f)$ sont les densités spectrales de puissance du signal utile et du bruit en sortie de formation de voie Cette expression est obtenue en posant les hypothèses suivantes :

*h1* : Le signal $x_i(n)$ parvenant à chaque capteur est modélisé par la somme du signal utile et du bruit, conformément à l'équation (1).

*h2* : Les bruits $n_i(n)$ et le signal utile $s(n)$ sont décorrélés.

*h3* : Les densités spectrales de puissance des bruits sont identiques sur chaque capteur ($\Phi_{n_i n_i}(f) = \Phi_{nn}(f)$, $i = 1,..,N$)

*h4* : Les bruits sont décorrélés entre capteurs (les densités interspectrales de puissance $\Phi_{n_i n_j}(f)$ sont nulles pour $i \neq j$).

*h5* : Les signaux d'entrée $x_i(n)$ sont parfaitement remis en phase vis-à-vis de $s(n)$.

Les deux grandeurs $\Phi_{ss}(f)$ et $\Phi_{\overline{nn}}(f)$, nécessaires au calcul de $W_{opt}(f)$, sont a priori inconnues et la difficulté réside dans leur estimation. Pour l'ensemble des méthodes exposées dans l'état de la technique, $\Phi_{ss}(f)$ et $\Phi_{\overline{nn}}(f)$ sont estimées à partir des signaux reçus sur les différents capteurs. Par exemple, sous l'hypothèse de non-corrélation des bruits captés par chaque microphone, l'estimation de la densité spectrale de puissance (par la suite notée *dsp*) du signal utile $\Phi_{ss}(f)$ peut être réalisée à partir des densités interspectrales de puissance (par la suite notée *dip*) $\Phi_{v_i v_j}(f)$ des signaux microphoniques *i* et *j* remis en phase.

Les grandeurs spectrales $\Phi_{v_i v_i}(f)$ et $\Phi_{v_i v_j}(f)$ s'écrivent alors:

$$\Phi_{v_i v_i}(f) = \Phi_{ss}(f) + \Phi_{nn}(f) \tag{4}$$

$$\Phi_{v_i v_j}(f) = \Phi_{ss}(f), \qquad i \neq j \tag{5}$$

Un moyen d'estimer $W_{opt}(f)$ consiste à utiliser une moyenne de ces densités spectrales et interspectrales de puissance respectivement au dénominateur et au numérateur :

$$\hat{W}(f) = \frac{\dfrac{2}{N(N-1)} \gamma \left( \displaystyle\sum_{i=1}^{N-1} \sum_{j=i+1}^{N} \hat{\Phi}_{v_i v_j}(f) \right)}{\dfrac{1}{N} \displaystyle\sum_{i=1}^{N} \hat{\Phi}_{v_i v_i}(f)} \qquad \text{avec } \gamma(.) = \text{Re}(.) \text{ ou } \gamma(.) = |.|$$

$$\tag{6}$$

L'utilisation de l'opérateur module ou partie réelle $\gamma(.)$ est justifiée par la grandeur à estimer au numérateur, $\Phi_{ss}(f)$, qui doit être réelle et positive. La notation "^" désigne l'estimation (au sens statistique) de la grandeur sur laquelle elle s'applique

L'estimateur $\hat{W}(f)|_{\gamma(.)=\text{Re}(.)}$ a été proposé par R. Zelinski [Zelinski 88] avec une mise en oeuvre dans le domaine temporel. Dans [Simmer 92a], l'estimation et le filtrage sont réalisés dans le domaine fréquentiel. $\hat{W}(f)|_{\gamma(.)=|.|}$ est une extension à un nombre quelconque de capteurs du traitement bi-capteur décrit dans [Allen 77]. En fait, l'équation (6) représente, d'un point de vue du principe algorithmique, deux méthodes d'estimation du filtre de Wiener : $\hat{W}(f)|_{\gamma(.)=\text{Re}(.)}$ et $\hat{W}(f)|_{\gamma(.)=|.|}$.

Un autre estimateur, qui utilise la *dsp* du signal de sortie d'antenne $\hat{\Phi}_{yy}(f)$, a été proposé dans [Simmer 92b] :

$$\hat{W}(f) = \frac{\frac{2}{N(N-1)} \gamma \left( \sum_{i=1}^{N-1} \sum_{j=i+1}^{N} \hat{\Phi}_{v_i v_j}(f) \right)}{\hat{\Phi}_{yy}(f)}$$

$$(7)$$

Les grandeurs spectrales nécessaires à l'estimation du filtre W(f), en l'occurrence $\hat{\Phi}_{v_i v_i}(f)$, $\hat{\Phi}_{v_i v_j}(f)$ et $\hat{\Phi}_{yy}(f)$, sont elles-mêmes à estimer à partir des signaux $V_i(f)$ et $Y(f)$. En effet, en pratique, la mise en oeuvre du post-filtre en considérant un environnement réel et des signaux de parole nécessite une estimation qui assure le suivi de la non-stationnarité de tels signaux tout en garantissant une qualité d'estimation acceptable. Dans la Fig. le bloc (220) correspond à la partie du traitement où sont estimés $\Phi_{v_i v_i}(f)$, $\Phi_{v_i v_j}(f)$ et $\Phi_{yy}(f)$.

Les systèmes de réception pour antenne multicapteur tels que décrits plus haut (utilisant ou non un post-filtrage) ne permettent pas d'éliminer le bruit lorsque le signal utile est absent. En outre, lorsqu'un post-filtrage est utilisé, le bruit (le signal perturbateur), s'il est atténué par le post-filtre est également distordu par ce dernier Dans de nombreuses applications et notamment dans celle de la prise de son, la distorsion d'un signal perturbateur, tel que celui généré par une source nuisible présente dans un champ de réception sonore, engendre un effet particulièrement gênant.

Le problème général à la base de l'invention est de déterminer si un signal utile est effectivement présent dans le champ de réception de l'antenne multicapteur.

Un premier problème subsidiaire à la base d'un mode de réalisation de l'invention est celui de la détermination de la direction d'arrivée du signal utile (lorsque celui-ci est présent).

Un second problème subsidiaire à la base d'un autre mode de réalisation de l'invention est celui de la suppression de l'effet perturbateur lorsque le signal utile a été estimé absent.

Le problème général indiqué plus haut est résolu par le système de réception tel que revendiqué dans la revendication 1

Le premier problème subsidiaire est résolu par le système de réception tel que revendiqué dans la revendication dépendante 8.

Le second problème subsidiaire est résolu par le système de réception tel que revendiqué dans la revendication 13.

De manière générale, le système selon l'invention estime la présence d'un signal utile et/ou la direction d'arrivée d'un signal utile en calculant la fonction de transfert d'un post-filtre optimal (ou d'un jeu de post-filtres optimaux), que le post-filtre soit effectivement appliqué en sortie d'antenne ou non. L'analyse statistique des valeurs fréquentielles de la fonction de transfert, notamment sa variance et le taux d'occupation des valeurs fréquentielles au delà d'un seuil donné permet d'obtenir un indice de présence de signal utile.

Lorsque plusieurs jeux de filtres de voie sont utilisés, chaque jeu correspondant à un pointage de l'antenne dans une direction déterminée, le système permet d'estimer dans quelle direction se trouve la source utile.

Enfin, lorsqu'un post-filtrage est utilisé en sortie d'antenne, l'effet gênant du post-filtre est supprimé en basculant le signal de sortie sur l'entrée d'un atténuateur à gain fixe lorsque le système conclut à une absence de signal utile. Il est également prévu un lissage de gain entre le gain fixe et le gain du post-filtre afin de réduire les transitoires lors de la commutation.

L'invention sera mieux comprise grâce à une description détaillée des figures suivantes.

Les caractéristiques de l'invention mentionnées ci-dessus, ainsi que d'autres, apparaîtront plus clairement à la lecture de la description suivante d'un exemple de réalisation , ladite description étant faire en relation avec les dessins joints, parmi lesquels:

la Fig. 1 représente un schéma de principe d'une antenne multicapteur ;
la Fig. 2 représente un schéma de principe d'une antenne multicapteur avec post-filtrage ;
la Fig. 3 représente un schéma de principe d'une antenne multicapteur associée à un système de réception avec détermination de présence de signal utile selon l'invention ;
la Fig. 4 représente un schéma. de principe d'un système de réception avec détermination de présence de signal utile et post-filtrage selon un mode de réalisation de l'invention;
la Fig. 5 représente un schéma de principe du module d'analyse statistique et du détecteur de présence de signal utile lorsqu'un seul jeu de filtres de voie est utilisé ,
la Fig. 6 représente un schéma de principe du lissage de gain utilisé pour la commutation du post-filtre ;
la Fig. 7 représente un schéma de principe d'une antenne multicapteur associée à un système de réception avec détermination de présence et de direction d'arrivée de signal utile selon un mode de réalisation de l'invention ;
la Fig. 8 représente un schéma de principe d'une antenne multicapteur associée à un système de réception avec détermination de présence et de direction d'arrivée de signal utile ainsi que post-filtrage selon un mode de réalisation de l'invention ;
la Fig. 9 représente un schéma de principe des modules d'analyse statistique et de détection de lobe actif lorsque plusieurs jeux de filtres de voie sont utilisés ;
la Fig. 10 représente la mise en oeuvre du système de réception selon l'invention dans le domaine de la prise de son ;
la Fig. 11 représente le détail du bloc de post-traitement de la Fig. 10 ;
la Fig. 12 représente le détail du bloc d'analyse statistique et du détecteur de signal utile de la Fig. 11 ;

Il convient tout d'abord de définir le formalisme retenu pour décrire les grandeurs intervenant par la suite. La notation $A(t, f)$, représente la grandeur $a$ à l'instant $t$ et à la fréquence $f$. Ceci permet de décrire une grandeur dans le domaine fréquentiel, mais qui varie au cours du temps De plus, le passage d'un signal du domaine temporel au domaine fréquentiel nécessite une durée d'observation. En ce sens, on entend que $A(t,f)$ est une valeur connue à l'instant $t$, mais que son calcul a pu nécessiter une certaine durée. $A(t,f)$ peut être un signal, une grandeur spectrale (telles que les *dsp* ou *dip*), ou un filtre variant au cours du temps. De la même façon, la notation $A(t)$, représente la grandeur $a$ à l'instant $t$, qui varie avec le temps, mais dont toutes les composantes fréquentielles sont égales dans la durée d'observation concernée. La notation $A(f)$, quant à elle, représente la grandeur $a$ à la fréquence $f$, elle ne concerne que les filtres de voie de l'antenne qui assurent une pondération fréquentielle, mais qui restent fixes dans le temps.

D'autre part, le terme "gain" que nous utilisons dans la suite de ce document englobe les notions d'amplification (gain supérieur à 1) et d'atténuation (gain inférieur à 1).

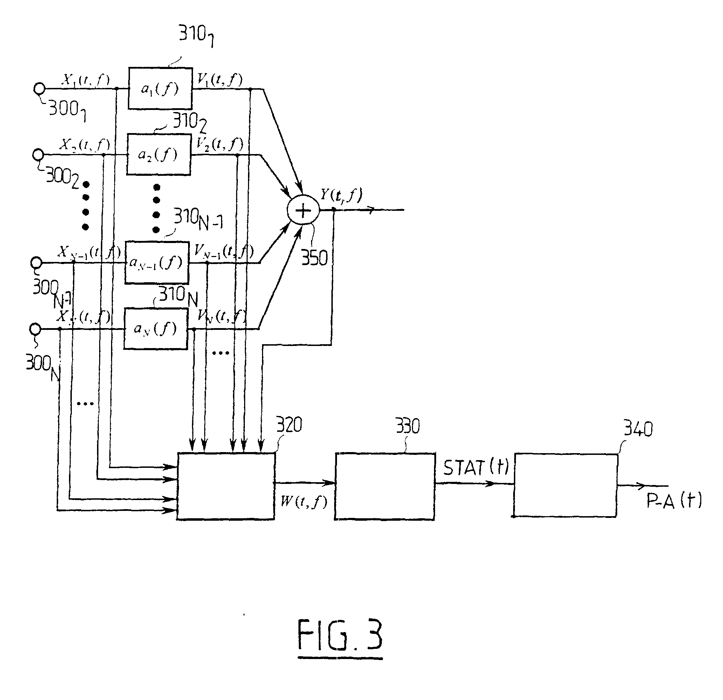

La Fig. 3 représente le principe général de l'invention.

Les signaux d'entrée de l'antenne $X_i(t,f)$ ($i = 1,..,N$), prélevés sur les capteurs (300,), sont filtrés par les filtres de voies (310,), de fonctions de transfert respectives $a_i(f)$. Comme indiqué dans la description de l'état de la technique, ces filtres fixes sont réalisés de sorte à assurer un contrôle de la directivité de l'antenne. De plus, ils permettent le pointage de l'antenne dans une direction donnée. La sortie d'antenne $Y(t,f)$ est délivrée par la sommation des signaux $V_i(t,f)$ ainsi obtenus.

Le système comprend également un bloc de calcul (320) de la fonction de transfert de filtre optimal (qui serait celle du post-filtre si un tel filtre devait être utilisée en sortie d'antenne) à partir des signaux de voie. Les signaux de voie peuvent être prélevés soit directement au niveau des capteurs (signaux $X_i(t,f)$), soit après filtrage de voie par les filtres (310$_i$)(signaux $V_i(t,f)$). Le signal de sortie d'antenne $Y(t,f)$ peut également être utilisé par le bloc de calcul pour l'estimation de la fonction de transfert du post-filtre. Ces différents modes de réalisation sont représentés sur la Fig. 3. Il est important de noter que le système selon ces modes de réalisation ne comporte pas de post-filtre, seule la fonction de transfert de ce dernier est calculée.

Le système comprend enfin un bloc d'analyse statistique (330) des valeurs fréquentielles $W(t,f)$ au cours du temps, bloc qui sera décrit en détail plus loin et qui fournit un ensemble de résultats d'analyse ($STAT(t)$).

Bien que toute antenne de l'état de la technique puisse être utilisée, une réalisation des filtres de voie (310$_i$) basée sur la technique des antennes super-directives avec prise en compte du module et de la phase, telle que décrite dans la demande de brevet EP-A-903960 au nom de la demanderesse, pourra être avantageusement employée. Cette méthode est rappelée ci-après :

Soit un environnement composé d'une source utile $S_1(f)$, d'une source perturbatrice localisée cohérente $S_2(f)$, et d'un bruit incohérent $B(f)$. Soit $d_p$, la distance entre la source $p$ et le capteur $i$ de l'antenne, $c$ la vitesse de propagation. Le signal $X_i(f)$ observé sur le capteur (300$_i$), s'exprime par la relation :

$$X_i(f) = \frac{S_1(f)}{d_{1,i}}e^{-j\frac{2\pi f}{c}d_{1,i}} + \frac{S_2(f)}{d_{2,i}}e^{-j\frac{2\pi f}{c}d_{2,i}} + B_i(f) \tag{8}$$

où $B_i(f)$ est le bruit incohérent mesuré sur le capteur $i$.

Le traitement d'antenne réalisé étant linéaire, la sortie $Y(f)$ s'exprime comme une combinaison linéaire des signaux observés sur les différents capteurs :

$$Y(f) = \sum_{i=1}^{N} a_i(f)X_i(f) \tag{9}$$

Soit retard $\tau_i$, celui-ci, applique sur le capteur $i$, assure le pointage de l'antenne dans la direction désirée Ainsi $e^{j2\pi f\tau_i}$ représente le terme de remise en phase du signal utile pour le capteur ($300_i$). Celui-ci est inclus dans la pondération $a_i(f)$ qui est liée à $b_i(f)$ par la relation :

$$a_i(f) = b_i(f)e^{j2\pi f\tau_i} \qquad (10)$$

On définit aussi un vecteur caractérisant (pour la source utile ou de bruit considérée) l'affaiblissement des amplitudes des signaux sur les éléments de l'antenne. Ce vecteur est normalisé par rapport à l'affaiblissement subi par le signal capté par le capteur le plus proche de la source donné par l'expression :

$$a_{p,i} = \frac{\min\{d_{p,i}\}}{d_{p,i}} \qquad (11)$$

Le gain du signal utile et le gain du signal perturbateur cohérent sont respectivement:

$$G_1(f) = \sum_{i=1}^{N} b_i(f)\alpha_{1,i} \qquad (12)$$

et

$$G_2(f) = \sum_{i=1}^{N} b_i(f)\alpha_{2,i}e^{j2\pi f\frac{d_{1,i}-d_{2,i}}{c}} \qquad (13)$$

On introduit maintenant le facteur de directivité $Fd(f)$ qui est calculé en faisant varier la position de la source perturbatrice de manière à obtenir une moyenne du gain du signal perturbateur pour toutes les directions ($\varphi$ et $\theta$ représentent respectivement les angles d'azimut et d'élévation de l'espace):

$$Fd(f) = \frac{|G_1(f)|^2}{moyenne(|G_2(f)|^2)} = \frac{\sum_{i=1}^{N} b_i(f)\alpha_{1,i}}{\frac{1}{4\pi}\iint_{\varphi\,\theta}\left|\sum_{i=1}^{N} b_i(f)\alpha_{2,i}e^{j2\pi f\frac{d_{1,i}-d_{2,i}}{c}}\right|^2 \sin\theta\, d\varphi\, d\theta} \qquad (14)$$

Toutes les grandeurs définies ci-dessus peuvent être réécrites sous forme vectorielle et matricielle:

$$b(f) = (b_1(f) \cdots b_N(f)) \qquad (15)$$

$$\alpha_1(f) = (\alpha_{1,1} \cdots \alpha_{1,N}) \qquad (16)$$

$$\alpha_2(f) = \left( \alpha_{2,1}e^{j\,2\,\pi f\frac{d_{1,1}-d_{2,1}}{c}} \quad \cdots \quad \alpha_{2,N}e^{j\,2\,\pi f\frac{d_{1,N}-d_{2,N}}{c}} \right)$$

$$(17)$$

Ainsi, le facteur de directivité $Fd(f)$ s'écrit:

$$Fd = \frac{b(f)A(f)b^H(f)}{b(f)D(f)b^H(f)} \qquad (18)$$

avec

$$A(f) = \alpha_1(f)\alpha_1^H(f) \qquad (19)$$

$$\mathbf{D}(f) = \frac{1}{4\pi}\iint_{\varphi\,\theta}\alpha_2(f)\alpha_2^H(f)\sin\theta\,\mathrm{d}\varphi\,\mathrm{d}\theta$$

$$(20)$$

où la notation "$^H$" désigne l'opération de transposition-conjugaison.

Le problème connu inhérent aux antennes super-directives est leur manque de robustesse. En effet, elles peuvent assurer un facteur de directivité important mais au détriment d'une amplification inacceptable du bruit incohérent, dont l'expression est donnée par:

$$G_a(f) = \frac{1}{\displaystyle\sum_{i=1}^{N}\left|b_i(f)\right|^2} = \frac{1}{\mathbf{b}(f)\mathbf{b}^H(f)}$$

$$(21)$$

La méthode proposée dans la demande de brevet EP-A-903960 consiste à rechercher le traitement linéaire qui maximise le facteur de directivité $Fd(f)$ sous les contraintes suivantes:

1. une contrainte linéaire qui interdit toute distorsion du signal utile, qui se traduit mathématiquement par:

$$\left|G_1(f)\right| = \left|b^H(f)\alpha_1(f)\right| = 1 \qquad (22)$$

2. une contrainte non-linéaire qui fixe la valeur minimale de la réduction de bruit incohérent imposée par l'utilisateur $G_{amin}(f)$, qui se traduit mathématiquement par:

$$b(f)b^H(f) < \frac{1}{G_{amin}(f)} \qquad (23)$$

3. des contraintes linéaires supplémentaires, si elle sont souhaitées par l'utilisateur, comme des atténuations fortes dans des directions données, une largeur de lobe principal fixée, etc. Celles-ci sont exprimées mathématiquement par:

$$C^H(f)b(f) = u^H(f) \tag{24}$$

où $\mathbf{C}(f)$ est la matrice des contraintes et $\mathbf{u}(f)$ le vecteur des contraintes. Chaque colonne de $\mathbf{C}(f)$ contient un vecteur correspondant à une direction de l'espace et la colonne correspondante de $\mathbf{u}(f)$ contient le conjugué de la fonction de transfert imposée pour cette direction.

D'autre part, la maximisation du facteur de directivité $Fd(f)$ est obtenue en minimisant le dénominateur de l'équation (18). Ainsi la formulation mathématique du problème est la suivante :

$$Min\left(\mathbf{b}(f)\mathbf{D}(f)\mathbf{b}^H(f)\right) \tag{25}$$

sous

$$\left|b^H(f)\alpha_1(f)\right| = 1$$

et

$$b(f)b^H(f) < \frac{1}{G_{amin}(f)}$$

et

$$C^H(f)b(f) = u^H(f)$$

La solution de ce problème peut être obtenue par un algorithme itératif ou la méthode des multiplicateurs de Lagrange. On obtient ainsi les filtres optimaux $b_i(f)$ au sens de ce problème, et par conséquent, les filtres de voie $a_i(f)$ tels qu'illustrés dans la Fig. 3 en utilisant l'équation (10)

Dans [Marro 98], l'expression de $W(t,f)$ qui donne les meilleurs résultats est donnée par:

$$W(t,f) = \frac{\sum_{i=1}^{N}\left|b_i(f)\right|^2}{\gamma\left(\sum_{i=1}^{N-1}\sum_{j=i-1}^{N}b_i(f)b_j^*(f)\right)} \cdot \frac{\gamma\left(\sum_{i=1}^{N-1}\sum_{j=i+1}^{N}\hat{\Phi}_{v_i v_j}(t,f)\right)}{\sum_{i=1}^{N}\hat{\Phi}_{v_i v_i}(t,f)} \tag{26}$$

où la notation "*" désigne l'opération de conjugaison. Rappelons aussi que $\gamma(.) = Re(.)$ ou $\gamma(.) = |.|$.

L'expression de $W(t,f)$ utilisée dans la présente invention tient compte de l'affaiblissement subi par le signal utile. Elle est obtenue en considérant que la fonction de transfert $W(t,f)$ doit être égale à l'unité lorsque seul le signal utile est actif L'expression proposée est la suivante :

$$W(t,f) = \frac{\sum_{i=1}^{N}\left|b_i(f)\right|^2\alpha_{1,i}^2}{\gamma\left(\sum_{i=1}^{N-1}\sum_{j=i+1}^{N}b_i(f)b_j^*(f)\alpha_{1,i}\alpha_{1,j}\right)} \cdot \frac{\gamma\left(\sum_{i=1}^{N-1}\sum_{j=i+1}^{N}\hat{\Phi}_{v_i v_j}(t,f)\right)}{\sum_{i=1}^{N}\hat{\Phi}_{v_i v_i}(t,f)} \tag{27}$$

ou encore si l'on utilise la sortie d'antenne Y(t,f) pour estimer la densité spectrale :

$$W(t,f)=\frac{\gamma\left(\sum_{i=1}^{N-1}\sum_{j=i+1}^{N}\hat{\phi}_{v_i,v_j}(t,f)\right)}{\gamma\left(\sum_{i=1}^{N-1}\sum_{j=i+1}^{N}b_i(f)b_j^*(f)\alpha_{1,i}\alpha_{1,j}\right)\Psi_{YY}(t,f)} \qquad (27')$$

Il est clair que la densité spectrale (dans l'équation (27)) et la densité interspectrale (dans les équations (27) et (27')) peuvent être estimées à partir d'un sous-ensemble réduit (de cardinal M<N) de capteurs. Les sommations portent alors sur ce sous-ensemble.

Alternativement, la structure de post-filtre décrite dans la demande de brevet FR9902662 déposée le 26.2.99 par la demanderesse pourrait être utilisée.

L'estimation de présence de signal utile est faite à partir d'une analyse statistique des valeurs frénuentielles de la fonction de transfert $W(t,f)$.

Le principe de l'analyse repose sur l'utilisation de deux types de grandeurs statistiques: la valeur moyenne (exprimée par un taux d'occupation au dessus d'un certain seuil) et la variance des valeurs fréquentielles de la fonction de transfert $W(t,f)$ En effet, la valeur moyenne s'approche de la valeur 1 en présence de signal utile et la variance augmente en présence de bruit. Ces deux informations complémentaires peuvent avantageusement être combinées afin d'éviter les fausses détections, en particulier sur le bruit.

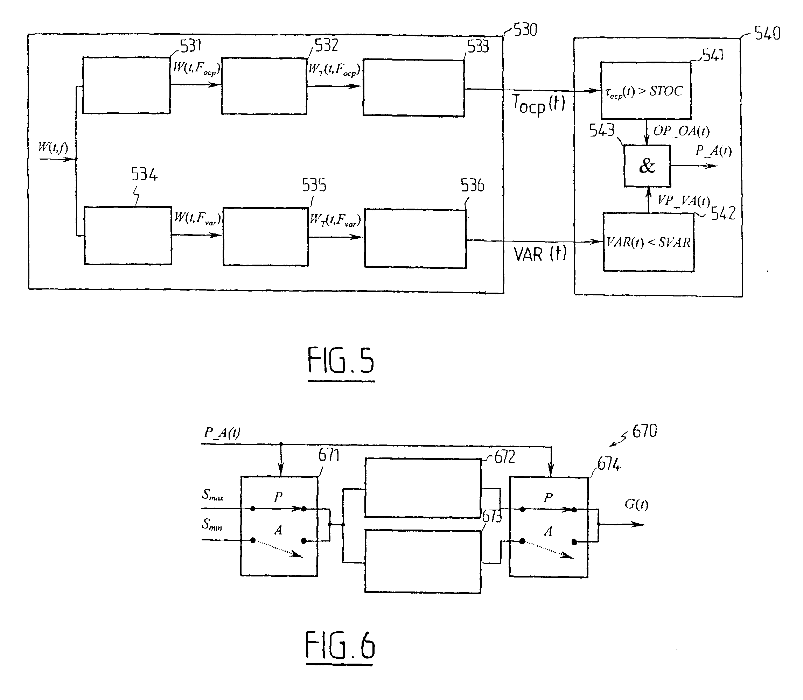

Le détail d'un mode de réalisation du module d'analyse statistique est représenté à la Fig. 5.

La fonction transfert $W(t,f)$ est présentée à l'entrée du module (530). La procédure relative au calcul du taux d'occupation du post-filtre sera d'abord décrite. On extrait de $W(t,f)$ par des moyens d'extraction (531) un ensemble de fréquences $F_{ocp}$ fixé par l'utilisateur. Le signal ainsi obtenu subit ensuite une transformation non-linéaire dans le module (532) pour donner une information plus pertinente. Une transformation logarithmique (en décibels) sera avantageusement utilisée:

$$W_T(t,F_{ocp}) = 20Log(|W(t,F_{ocp})|) \qquad (28)$$

Parmi l'ensemble des fréquences $F_{ocp}$ ainsi retenues dans $W_T(t,F_{ocp})$, on détermine dans le module (533) le taux de fréquences $\tau_{ocp}(t)$ pour lesquelles $W_T(t,F_{ocp})$ dépasse un seuil *SOC* :

$$\tau_{ocp}(t) = \frac{\text{taille du spectre dans } F_{ocp} \text{ tel que } W_T(t,F_{ocp}) > SOC}{\text{taille du spectre de } F_{ocp}} \qquad (29)$$

Concernant la chaîne de traitement relative au critère de variance du post-filtre, on extrait dans le module (534) les valeurs $W(t,f)$ à un ensemble de fréquences $F_{var}$: On réalise dans le module (535) une transformation non-linéaire. Nous noterons $W_T(t,F_{var})$ ces valeurs transformées La variance de ces valeurs est ensuite calculée dans le bloc (536).

Le détail d'un mode de réalisation du détecteur de présence de signal utile est illustré également en Fig. 5.

Le détecteur reçoit comme résultats d'analyse statistique (*STAT(t)*) le taux d'occupation $\tau_{ocp}(t)$ et la variance *VAR(t)*.

La valeur $\tau_{ocp}(t)$ est comparée par rapport à un seuil d'occupation *STOC* dans un comparateur (541) qui délivre une information binaire *OP_OA(t)* de présomption de présence de signal utile (*OP_OA(t) = OP* si $\tau_{ocp}(t)$>STOC) ou de présomption d'absence de signal utile (*OP_OA(t) = OA* si $\tau_{ocp}(t)$≤STOC).

De même la variance de $W_T(t,F_{var})$, *VAR(t)*, est ensuite comparée par rapport à un seuil de variance *SVAR* dans un comparateur (542) qui délivre une information binaire *VP_VA(t)* de présomption de présence de signal utile (*VP_VA(t) = VP* si *VAR(t)<SVAR*) ou de présomption d'absence de signal utile (*VP_VA(t) = VA* si *VAR(t)≥SVAR*).

Les deux informations binaires de "présomption de présence/absence de signal utile" *OP_OA* et *VP_VA* sont ensuite injectées dans une fonction logique "ET" (543) qui délivre le signal binaire *P_A* de présence (*P*) ou d'absence (*A*) de signal utile.

La façon dont est calculée ici la détection de signal utile n'est pas limitative. En effet, les informations de taux d'occupation et de variances pourraient être utilisées seules. De plus, d'autres transformations non-linéaires que le passage en dB (ou pas de transformations du tout) peuvent être utilisées.

Le bloc estimant la présence de signal utile pourrait également fournir une information de probabilité de présence (au lieu de l'information binaire) à partir de la même analyse statistique.

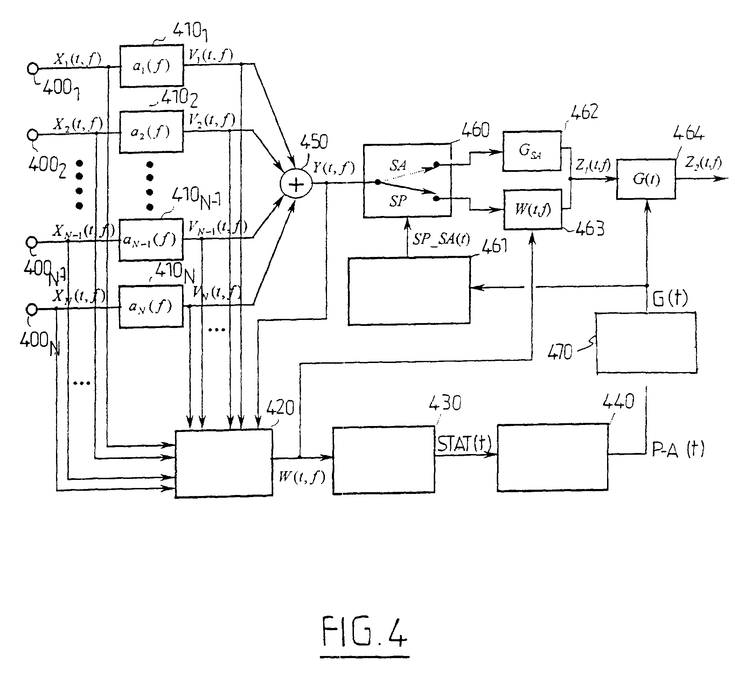

La Fig. 4 représente un mode de réalisation de l'invention lorsqu'un post-filtrage est effectué. La structure du système de réception est d'abord décrite. Les notations utilisées sont identiques à celles de la Fig. 3. La fonction de transfert du post-filtre est fournie par le bloc de calcul de filtre optimal (420). Le système de réception de la Fig. 4 comporte en outre un commutateur (460) commutant le signal de sortie d'antenne $Y(t,f)$ vers un atténuateur (462) à gain fixe donné $G_{SA}$ ou vers le post-filtre (463) de fonction de transfert $W(t,f)$. Le signal résultant de l'une ou l'autre voie, $Z_l(t,f)$, est appliqué à un amplificateur à gain variable (464) de gain $G(t)$. La valeur du gain $G(t)$ est calculé par un bloc de calcul et de lissage de gain (470) à partir de l'indicateur de présence de signal utile. Le signal de commutation en sortie d'antenne, $SP\_SA(t)$, commandant le commutateur, résulte de la comparaison de la valeur de gain avec un seuil de commutation $ST$ au sein d'un comparateur (461).

Alors que dans les systèmes de réception avec post-filtrage de l'état de la technique, le post-filtre est appliqué en permanence au signal de sortie d'antenne, ce qui a pour conséquence comme on l'a vu, non seulement de ne pas complètement supprimer le signal nuisible mais également de le distordre. le mode de réalisation de la Fig 4 utilise l'indication de présence ou d'absence de signal utile pour respectivement appliquer le post-filtre ou une atténuation constante. Ce contrôle du signal en sortie d'antenne présente un double avantage par rapport à l'état de la technique: il permet non seulement de choisir le niveau de l'atténuation, mais aussi d'éviter la distorsion de la perturbation résiduelle. Pour assurer la continuité lors de la commutation de la sortie d'antenne $Y(t,f)$ du post-filtre vers le gain d'atténuation, un lissage temporel de gain est prévu. Le contrôle de gain est effectué de la manière suivante en présence de signal utile, le gain $G(t)$ est proche de 1, celui-ci est appliqué en sortie d'antenne en cascade avec le post-filtre $W(t,f)$. Lorsque le système détecte l'absence du signal utile, le gain $G(t)$ décroît continûment, lorsqu'il atteint un seuil donné $ST$, la sortie d'antenne est commutée vers un gain fixe donné $G_{SA}$ en cascade avec $G(t)$. A la détection de présence de signal utile, le gain $G(t)$ croît continûment jusqu'au seuil $ST$. Le franchissement du seuil déclenche la commutation de la sortie d'antenne dans l'autre état.

Plus précisément, lorsque la valeur de $G(t)$ franchit dans le sens croissant le seuil $ST$ (choisi entre les valeurs $S_{min}$ et $S_{max}$) le signal de comparaison $SP\_SA(t)$ oriente le signal de sortie d'antenne $Y(t,f)$ vers le post-filtre (463). Lorsque la valeur de $G(t)$ franchit dans le sens décroissant le seuil $ST$, le signal de comparaison $SP\_SA(t)$ oriente le signal de sortie d'antenne $Y(t,f)$ vers l'atténuateur de gain constant (462).

Le calcul de la fonction de transfert $W(t,f)$ est identique à celui exposé dans la description de la Fig. 3.

De la même façon, les filtres de voie peuvent être réalisés selon la méthode d'optimisation divulguée dans EP-A-903960 et déjà exposée plus haut. Avantageusement, cependant, les filtres de voie (410, ) seront réalisés de manière à ce que leur fonctionnement conjointement avec le post-filtre $W(t,f)$ soit optimal. Il est proposé ci-après deux méthodes d'optimisation des filtres de voie tenant compte du post-filtre en sortie.

Les deux méthodes ont pour but de minimiser la perturbation du signal utile lorsqu'une antenne est mise en cascade avec un post-filtre. En effet, une optimisation indépendante des deux modules donne des performances bien inférieures.

Soit $A_s(f)$ la fonction définie par:

$$A_s(f) = \sum_{i=1}^{N} \left| b_i(f) \alpha_{1,i} \right|^2$$

$$(30)$$

avec les mêmes notations que celles utilisées pour la description de la Fig. 3.

L'expression (30) peut s'écrire sous forme matricielle :

$$\mathbf{A}_s(f) = \mathbf{b}(f) \Omega \mathbf{b}^H(f) \quad \text{avec} \quad \Omega = \begin{bmatrix} \alpha_{1,1}^2 & 0 & \cdots & 0 \\ 0 & \alpha_{1,2}^2 & \ddots & \vdots \\ \vdots & \ddots & \ddots & 0 \\ 0 & \cdots & 0 & \alpha_{1,N}^2 \end{bmatrix} \quad (31)$$

Pour l'antenne, les performances optimales sont obtenues en maximisant le facteur de directivité $Fd(f)$ et pour le post-filtre en minimisant $A_s(f)$.

Première méthode :

On recherche le traitement linéaire qui maximise le facteur de directivité $Fd(f)$ et qui minimise conjointement $A_s(f)$ sous les mêmes contraintes que celles fixées par les expressions (22),(23),(24).
Ainsi la formulation mathématique de l'optimisation est la suivante:

$$Min\left(\mathbf{b}(f)\left(\left(1 - \rho(f)\right)\mathbf{D}(f) + \rho(f)\Omega\right)\mathbf{b}^H(f)\right)$$

$$(32)$$

sous les contraintes

$$\left|b^H(f)\alpha_1(f)\right| = 1$$

et

$$b(f)b^H(f) < \frac{1}{G_{amin}(f)}$$

et

$$C^H(f)b(f) = u^H(f)$$

Le premier terme de (32) correspond à la maximisation du facteur de directivité (terme figurant au dénominateur de $Fd(f)$) et le second à la minimisation de $A_s(f)$, la pondération scalaire $\rho(f)$ permettant d'accorder des importances relatives à $\mathbf{D}(f)$ et $\Omega$ selon le type d'application.
De la même manière qu'indiqué dans la description de la Fig. 3, la solution de ce problème peut être obtenue par un algorithme itératif ou par la méthode des multiplicateurs de Lagrange.
En fait, imposer une valeur minimale $G_{amin}(f)$ à la réduction des bruits incohérents conduit implicitement à minimiser $A_s(f)$. Il est proposé dans une seconde méthode, de remplacer la contrainte non-linéaire sur le facteur de réduction des bruits incohérents par une contrainte linéaire sur le facteur de directivité. Cette seconde méthode est intéressante car elle permet la maîtrise du gabarit du facteur de directivité en fonction de la fréquence.

Seconde méthode :

On recherche le traitement linéaire qui minimise $A_s(f)$ sous les mêmes contraintes que celles fixées par les expressions (22) et (24), la contrainte fixée par l'expression (23) étant remplacée par une contrainte linéaire qui fixe la valeur minimale du facteur de directivité imposée par l'utilisateur, soit $Fd_{min}(f)$, ce qui se traduit mathématiquement par l'expression suivante :

$$b(f)D(f)b^H(f) < \frac{1}{Fd_{min}(f)} \qquad (33)$$

Ainsi la formulation mathématique de l'optimisation est la suivante:

$$Min\left(\mathbf{b}(f)\Omega\mathbf{b}^H(f)\right)$$

$$(34)$$

sous

$$\left| b^H(f)\alpha_1(f) \right| = 1$$

et

$$b(f)D(f)b^H(f) < \frac{1}{Fd_{min}(f)}$$

et

$$C^H(f)b(f) = u^H(f)$$

De la même manière que pour la première méthode, la solution de ce problème peut être obtenue par un algorithme itératif ou par la méthode des multiplicateurs de Lagrange

Il convient maintenant de décrire le bloc de calcul et de lissage de gain de la Fig. 4 Le schéma de fonctionnement de ce bloc est illustré à la Fig. 6

Nous noterons P l'état de présence et A l'état d'absence du signal utile. Nous supposerons que l'estimateur de présence de signal utile fournit une indication binaire $P\_A(t)$.

La fonction du bloc de calcul et de lissage de gain (670) est de faire décroître continûment le gain $G(t)$ vers $S_{min}$ lors du passage de l'état $P$ à l'état $A$ et de faire croître le gain $G(t)$ vers la valeur $S_{max}$ lors du passage en sens inverse.

L'indication binaire $P\_A(t)$ varie au cours du temps et commande la commutation entre deux valeurs de gain $S_{min}$ et $S_{max}$ grâce au commutateur (671). Lorsque le signal utile est présent, la valeur maximale $S_{max}$ (comme nous l'avons dit précédemment, cette valeur est généralement fixée à 1) est injectée à l'entrée commune des deux filtres passe-bas (672) et (673). Lorsque le signal utile est absent, c'est la valeur maximale $S_{min}$ qui alimente l'entrée commune. Pour assurer la croissance continue puis le maintien de $G(t)$ à la valeur $S_{max}$ lors des transitions de l'état $A$ à l'état $P$, le signal d'entrée est filtré par un filtre passe-bas (672) de constante de temps $\tau_P$. Le choix de cette constante de temps conditionne le temps de montée du signal $G(t)$. De la même manière, pour faire décroître continûment puis maintenir de $G(t)$ à la valeur $S_{min}$ lors des transitions de l'état $P$ à l'état $A$, le signal d'entrée est filtré par un filtre passe-bas de constante de temps $\tau_A$, qui conditionne le temps de descente de $G(t)$. Les sorties des deux filtres passe-bas sont reliées aux entrées d'un commutateur (674) qui sélectionne la sortie du filtre passe-bas de constante de temps $\tau_A$ si le signal utile est absent et la sortie du filtre passe-bas de constante de temps $\tau_P$ si le signal utile est présent. La sortie du commutateur (674) fournit le signal de gain lissé G(t).

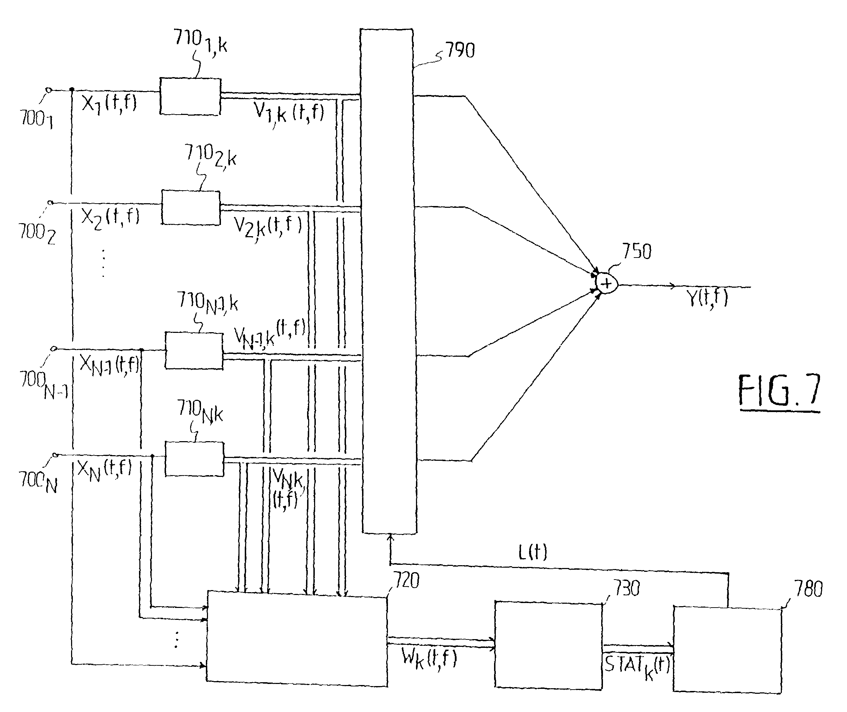

Nous décrirons maintenant un mode de réalisation de l'invention illustrée à la Fig. 7 utilisant une pluralité de jeux de filtres de voie et permettant d'estimer la direction d'arrivée d'un signal utile.

Le système de réception de la Fig. 7 ne contient pas comme précédemment un seul jeu de filtres de voies associé à un pointage de l'antenne dans une seule direction, mais plusieurs jeux de filtres de voie ($710_{i,k}$) ($k = 1,..,K$) permettant le pointage dans $K$ directions différentes. La grandeur $k$ est l'indice de la direction de pointage Les signaux d'entrée de l'antenne $X_i(t,f)$, prélevés sur les capteurs ($700_i$) sont filtrés par les jeux de filtres de voie associés ($710_{i,k}$). Ceux-ci délivrent pour chaque voie, $K$ signaux $V_{i,k}(t,f)$. Si la source utile est localisée par le système dans la direction d'indice $m$, le commutateur de lobe sélectionne les signaux de voie $V_{i,m}(t,f)$. La sortie d'antenne $Y(t,f)$ est obtenue par la sommation de ces derniers.

Les différents jeux de filtres de voie ($710_{i,k}$) de fonctions de transfert $a_{i,k}(f)$ ($k = 1,..,K$) peuvent être réalisés selon une technique d'antenne super-directive comme déjà exposée dans la description de la Fig. 3.

Pour chaque direction k, un module de calcul ($720_k$) (non représenté) du bloc (720) estime la fonction de transfert $W_k(t,f)$ d'un post-filtre. Ce module reçoit, de manière analogue à la Fig. 3, soit les signaux $X_i(t,f)$ prélevés directement au niveau des capteurs, soit le jeu de signaux $V_{i,k}(t,f)$) ($k = 1,..,K$) après filtrage de voie par le jeu de filtres ($710_{i,k}$). Ces deux modes de réalisation sont représentés sur la Fig. 7.

Il est important de noter que le système de la Fig. 7 ne comporte pas de post-filtres, seules les fonctions de transfert $W_k(t,f)$ de ces derniers sont calculées Le contenu fréquentiel de chaque post-filtre est soumis à une analyse statistique afin d'estimer la présence et la direction d'arrivée du signal utile. Les fonctions de transfert peuvent être calculées $W_k(t,f)$ selon une expression analogue à l'expression (26) :

$$W_k(t,f) = \frac{\sum_{i=1}^{N}|b_{i,k}(f)|^2}{\gamma\left(\sum_{i=1}^{N-1}\sum_{j=i+1}^{N}b_{i,k}(f)b_{j,k}^*(f)\right)} \cdot \frac{\gamma\left(\sum_{i=1}^{N-1}\sum_{j=i+1}^{N}\hat{\Phi}_{v_{i,k}v_{j,k}}(t,f)\right)}{\sum_{i=1}^{N}\hat{\Phi}_{v_{i,k}v_{i,k}}(t,f)}$$

$$(35)$$

où les $b_{i,k}(f)$ correspondent aux filtres $a_{i,k}(f)$ débarrassés des termes de retard $e^{j2\pi f\tau_{i,k}}$, $\tau_{i,k}$ étant le retard appliqué au capteur (700$_i$), et correspondant au pointage associé à l'indice de direction $k$. Les filtres $b_{i,k}(f)$ sont donc liés aux filtres $a_{i,k}(f)$ par la relation :

$$a_{i,k}(f) = b_{i,k}(f)e^{j2\pi f\tau_{i,k}}$$

$$(36)$$

Pour tenir compte de l'affaiblissement subi par le signal utile, il est avantageux d'utiliser une expression analogue à l'expression (27):

$$W_k(t,f) = \frac{\sum_{i=1}^{N}|b_{i,k}(f)|^2\alpha_{1,i,k}^2}{\gamma\left(\sum_{i=1}^{N-1}\sum_{j=i+1}^{N}b_{i,k}(f)b_{j,k}^*(f)\alpha_{1,i,k}\alpha_{1,j,k}\right)} \cdot \frac{\gamma\left(\sum_{i=1}^{N-1}\sum_{j=i+1}^{N}\hat{\Phi}_{v_{i,k}v_{j,k}}(t,f)\right)}{\sum_{i=1}^{N}\hat{\Phi}_{v_{i,k}v_{i,k}}(t,f)}$$

$$(37)$$

Où $\alpha_{l,i,k}$ est le l'affaiblissement en amplitude de la source utile sur le capteur (700$_i$),, associé à l'indice de direction $k$.

Les valeurs fréquentielles des fonctions de transfert $W_k(t,f)$ sont transmises à un module d'analyse statistique (730) (ou plus précisément à K modules élémentaires (730$_k$) fonctionnant en parallèle, non représentés). Ce dernier fournit des résultats d'analyse statistique $STAT_k(t)$ à un module de détection de lobe actif (780). Comme nous le verrons plus loin $STAT_k(t)$ peut être l'ensemble des K taux d'occupation des K fonctions de transfert $W_k(t,f)$ ou l'ensemble des K variances de ces mêmes fonctions de transfert ou encore l'union de ces deux ensembles. Le détecteur de lobe actif (780) fournit un signal L(t) pouvant prendre K valeurs distinctes, chacune correspondant à une direction de réception. Le commutateur de lobe (790) reçoit le signal L(t) donnant une direction d'arrivée m et sélectionne le jeu de signaux de voies $V_{i,m}(t,f)$ correspondant.

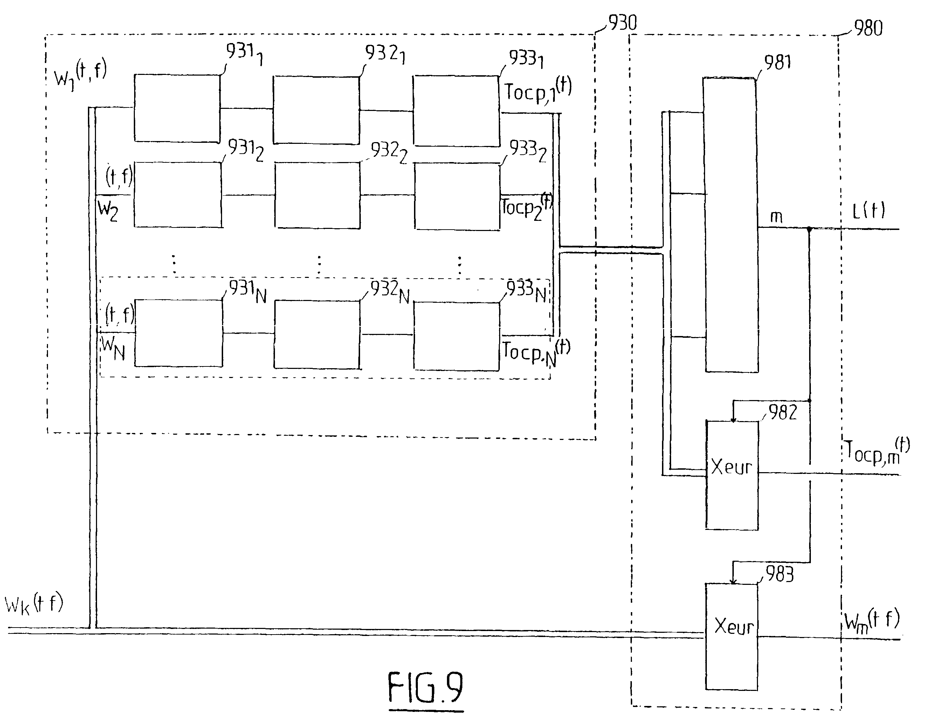

Le détail du module de détection du module d'analyse statistique (730) ainsi que du module de détection de lobe actif (780) est illustrée à la Fig. 9.

Le module d'analyse statistique (930) est constitué en fait de K modules élémentaires (930$_k$) identiques à celui référencé (530) en Fig. 5. Pour des raisons de simplification, seule la variante de réalisation fondée sur le critère du taux d'occupation a été ici illustrée. Il va de soi cependant que ces modules élémentaires (930$_k$) peuvent utiliser alternativement ou conjointement le critère de la variance.

Les valeurs fréquentielles $W_k(t,f)$ des K fonctions de transfert sont appliquées aux modules élémentaires. Ces modules extraient (grâce aux blocs (931$_k$)) les valeurs $W_k(t,F_{ocp})$ à des fréquences $F_{ocp}$ fixées par l'utilisateur. Les valeurs extraites subissent ensuite une transformation non-linéaire dans (932$_k$), par exemple une transformation logarithmique (en décibels, selon l'expression (28)).

Parmi l'ensemble des valeurs extraites transformées $W_{T,k}(t,F_{ocp})$, on détermine dans (933$_k$) le taux de fréquences $\tau_{ocp,k}(t)$ pour lesquelles $W_{T,k}(t,F_{ocp})$ dépasse un seuil $SOC$ (selon l'expression (29)).

L'ensemble de ces valeurs de taux d'occupation ainsi que, le cas échéant, les valeurs de variance sont transmises comme résultats d'analyse statistique $STAT_k$ (k=1..K) au détecteur de lobe actif (980). Les valeurs $\tau_{ocp,k}(t)$ sont comparées par un comparateur (981) et le signal $L(t)$ résultant prend la valeur d'indice de la direction m correspondant au taux d'occupation maximal:

$$L(t) = m \text{ tel que } \tau_{ocp,m}(t) = \max(\tau_{ocp,k}(t)) \ (k = 1,...,K) \tag{38}$$

Comme déjà indiqué plus haut, le critère du minimum de variance aurait pu être utilisé ou encore une combinaison du critère du maximum du taux d'occupation et du minimum de variance (deux comparateurs (981) auraient été alors nécessaires). Lorsque le critère du minimum de variance est retenu, le signal $L(t)$ prend la valeur d'indice de la direction m correspondant à la valeur de variance minimale :

$$L(t) = m \text{ tel que } VAR_m(t) = \min(VAR_k(t)) \ (k= 1,...,K) \tag{38'}$$

Dans le mode de réalisation représenté, le détecteur de lobe actif selectionne, grâce un premier commutateur (982) commandé par le signal L(t), le taux d'occupation $\tau_{ocp,m}(t)$. De même un second commutateur (983) commandé par le même signal sélectionne la fonction de transfert $W_m(t,f)$ correspondant à la direction de pointage m. Le taux d'occupation $\tau_{ocp,m}(t)$ et/ou la variance $VAR_m(t)$ sont transmis au détecteur de signal utile en tant que résultats d'analyse statistique $STAT_m(t)$.

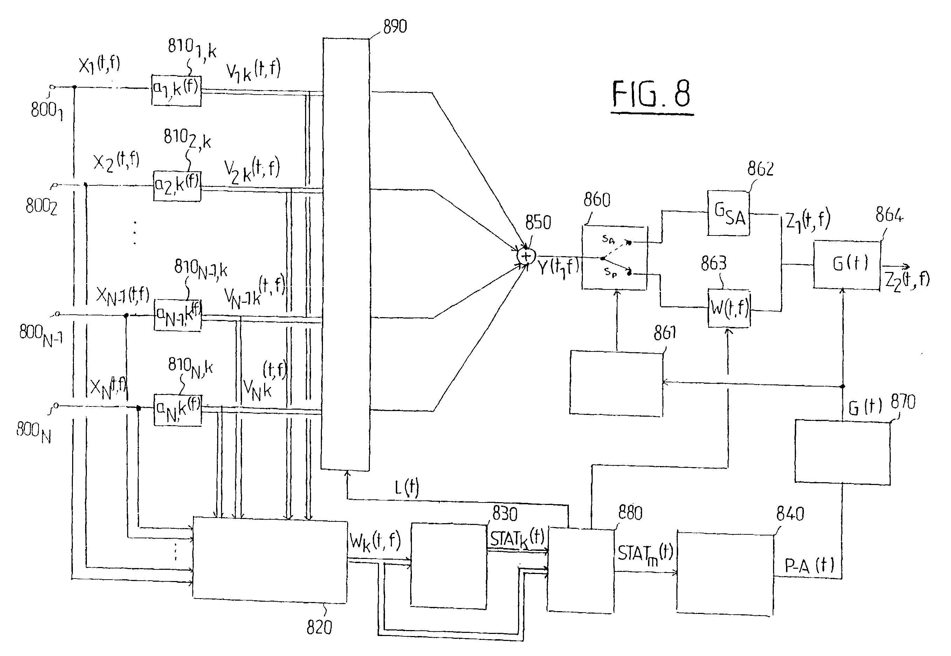

Il faut noter que les deux commutateurs (982) et (98 3) sont optionnels. Ils ne seront pas présents dans le cas où seule la direction d'arrivée est déterminée (Fig. 7). En revanche, ils seront nécessaires si la présence/absence de signal utile doit être détectée (Fig. 8).

La Fig. 8 illustre un mode de réalisation de l'invention utilisant une pluralité de jeux de filtres de voie comme dans la Fig. 7 ainsi qu'un détecteur de signal utile et un post-filtrage comme dans la Fig. 4.

Le détecteur de signal utile (840) a une structure identique à celle du bloc (540) de la Fig. 5 et sa structure ne sera donc pas à nouveau décrite. La valeur maximale du taux d'occupation $\tau_{ocp,m}(t)$ remplace le taux $\tau_{ocp}(t)$. Si ce taux d'occupation est supérieur à un seuil $STOC$, un signal utile est estimé présent. De même en cas d'utilisation du critère de variance. si la variance minimale $VAR_m(t)$ est inférieur à un seuil prédéterminé $SVAR$, un signal utile est estimé présent. Si les deux critères sont utilisés conjointement, les résultats précédents sont combinés afin de produire le signal $P\_A(t)$.

Le détecteur de lobe actif (880) a la structure du module (980) déjà décrite avec la Fig. 9, les deux commutateurs (982) et (983) étant effectivement présents.

Outre la direction d'arrivée m du signal utile, le détecteur de lobe actif (880) fournit ici également au post-filtre (863) les valeurs fréquentielles de la fonction de transfert $W_m(t,f)$ et au détecteur de signal utile (840) les résultats $STAT_m(t)$. Le reste de fonctionnement du système est identique à celui décrit en Fig. 4.

Les différents jeux de filtres de voie $(810_{i,k})(k = 1,..,K)$ peuvent être avantageusement réalisés selon l'une des deux méthodes d'optimisation conjointe exposées dans la description de la Fig. 4, améliorant ainsi significativement les performances en terme de robustesse de localisation.

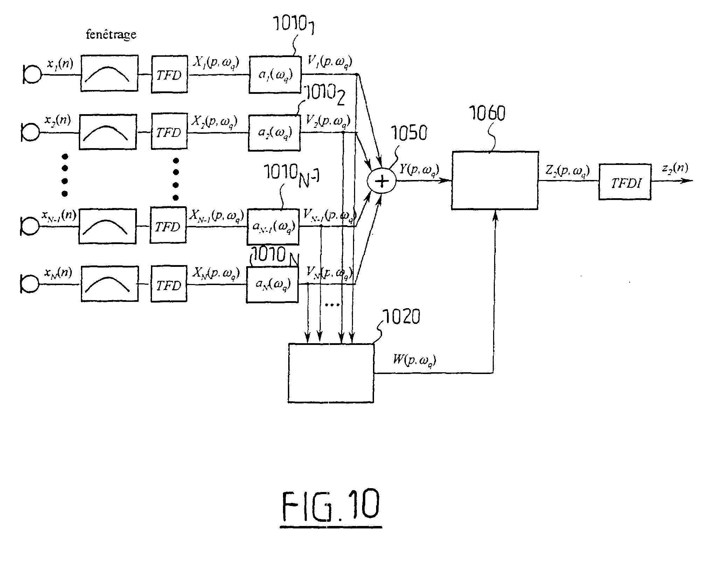

Nous allons décrire ci-après, à l'aide des Figs. 10 à 12, une application d'un système de réception selon l'invention à la prise de son pour des contextes de communication interactive (téléconférence, ordinateurs individuels communicants, etc.). Cette application met en oeuvre le système de base sans détermination de direction d'arrivée de signal utile, c'est à dire dans le contexte de la prise de son, sans localisation de locuteur.

Par souci de simplification, nous ne redéfinirons pas les grandeurs définies précédemment (seuils, états de commutation, etc.).

Nous considérons en Fig. 10 que les signaux d'entrée, $x_i(n)$ $(i = 1,..,N)$, et en sortie, $z_2(n)$ sont à temps discret (les convertisseurs analogique/numérique et numérique/analogique ne sont pas représentés). La grandeur $n$ représente l'indice temporel en temps discret.

Notons qu'une réalisation est également possible en temps continu (i.e. signaux et traitements analogiques).

Le traitement est réalisé par transformée de Fourier à court terme (ou fenêtre temporelle glissante). Les signaux microphoniques s'écrivent à l'analyse:

$$X_i\left(p, \omega_q\right) = \sum_{n=0}^{M-1} h_a(-n) x_i\left(pR + n\right) W_M^{-qn} \qquad q = 0,..., M\text{-}1$$

$$\tag{39}$$

A la synthèse, le signal est obtenu par:

$$z_2(n) = \sum_{p=-\infty}^{p=+\infty} h_s(n - pR)\frac{1}{M}\sum_{q=0}^{M-1}Z(p,\omega_q)W_M^{q(n-pR)} \qquad\qquad n = 0,...,M\text{-}1$$

$$(40)$$

A l'analyse, le passage dans le domaine fréquentiel est réalisé transformée de Fourier discrète (*TFD*). A la synthèse, le retour dans le domaine temporel est obtenu par transformée de Fourier discrète inverse (*TFDI*).

Pour l'analyse et la synthèse, la *TFD* et la *TFDI* sont avantageusement mis en oeuvre par transformée de Fourier rapide (ou *FFT* pour *Fast Fourier Transform*) et transformée de Fourier inverse rapide (ou *IFFT* pour *Inverse Fast Fourier Transform*). L'utilisation de la transformée en ondelettes est également envisageable.

Les notations utilisées sont les suivantes :

- $h_a(n)$ : fenêtre d'analyse de longueur *M*.
- *M* : longueur de la fenêtre d'analyse (en échantillons).
- $h_s(n)$ : fenêtre de synthèse de longueur *M* (non représentée sur le schéma car la fenêtre choisie est rectangulaire).
- *R* : pas de décalage des fenêtres (en échantillons).
- *p* : indice de trame.
- L'axe des fréquences étant discrétisé de façon uniforme, on note la $k^{\text{ieme}}$ composante:

$$\omega_q = 2\pi q/M \qquad q = 0,...,M\text{-}1 \qquad\qquad (41)$$

et

$$W_M = e^{j2\pi/M} = e^{j\omega_1} \qquad\qquad (42)$$

Le signal en sortie d'antenne $Y(p,\omega q)$ est obtenu par le sommateur (1050) effectuant la somme des signaux d'entrée préalablement filtrés par les filtres de voie (1010$_i$) :

$$Y(p,\omega_q) = \sum_{i=1}^{N}a_i(\omega_q)X_i(p,\omega_q)$$

$$(43)$$

Dans cet exemple typique, les fonctions de transfert $a_i(\omega_q)$ des filtres de voie (1010$_i$) peuvent être obtenus par les méthodes classiques déjà connues ou par l'une des deux méthodes d'optimisation conjointe proposées précédemment.

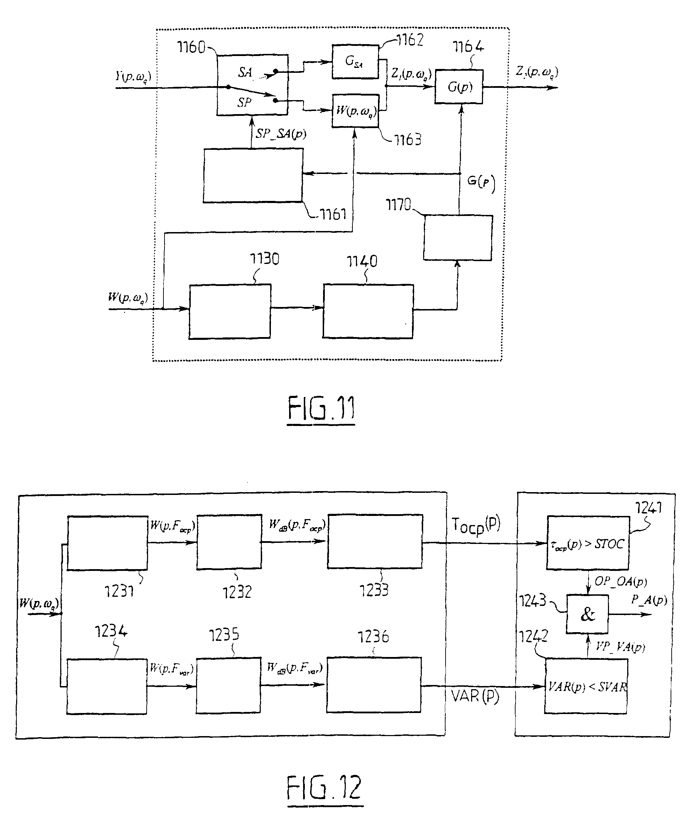

Le post-traitement en sortie d'antenne a été représenté symboliquement par le module (1060) en figure 10. Ce module est détaillé en figure 11. On y retrouve outre le module d'analyse statistique (1130) et le détecteur de signal utile (1140), le commutateur (1160) en sortie d'antenne, l'atténuateur à gain fixe (1162), le post-filtre (1163), l'amplificateur à gain variable (1164), le module de calcul et de lissage de gain (1170) ainsi que le comparateur (1161) comparant la valeur de gain à un seuil de commutation *ST*.

Le post-filtrage de $Y(p,\omega q)$ dépend de l'état du signal binaire $SP\_SA(p)$. Si $SP\_SA(p) = 1$ (état *SP*), le signal post-filtré est donné par:

$$Z_2(p,\omega_q) = Y(p,\omega_q)W(p,\omega_q)G(p) \qquad\qquad (44)$$

Dans l'autre cas ($SP\_SA(p) = 0$, état *SA*), il s'écrit :

$$Z_2(p,\omega_q) = Y(p,\omega_q)\,G_{SA}\,G(p) \tag{45}$$

Enfin, le signal de sortie est obtenu par retour dans le domaine temporel conformément à l'équation (40).

Module de calcul de la fonction de transfert W(p,$\omega_q$) du post-filtre:

Ce calcul est effectué selon l'expression (26) en prenant $\gamma$ (.) = Re(.) :

$$W\left(p,\omega_q\right) = \frac{\displaystyle\sum_{i=1}^{N}\left|b_i\left(\omega_q\right)\right|^2}{Re\left(\displaystyle\sum_{i=1}^{N-1}\sum_{j=i-1}^{N}b_i\left(\omega_q\right)b_j^*\left(\omega_q\right)\right)}\;\frac{Re\left(\displaystyle\sum_{i=1}^{N-1}\sum_{j=i+1}^{N}\hat{\Phi}_{v_iv_j}\left(p,\omega_q\right)\right)}{\displaystyle\sum_{i=1}^{N}\hat{\Phi}_{v_iv_i}\left(p,\omega_q\right)} \tag{46}$$

Les autres expressions de post-filtre de l'état de la technique peuvent être utilisées On peut aussi utiliser pour $W(p,\omega_q)$ l'expression (27) à la place de l'expression (26).

Pour limiter l'effet des erreurs d'estimation, $W(p, \omega_q)$ est ensuite écrêté dans l'intervalle [-1; 1] (pour éviter des amplifications non souhaitées).

Il est possible d'appliquer au post-filtre des transformations linéaires ou non-linéaires. Par exemple, on peut vouloir privilégier certaines valeur proche de 1 du post-filtre et réduire plus fortement les valeurs proches de 0 (application d'une pondération non-linéaire).

Les estimées $\hat{\Phi}_{v_iv_i}(p,\omega_q)$, et de $\hat{\Phi}_{v_iv_j}(p,\omega_q)$, doivent répondre à un compromis entre une estimation à long-terme, donnant une variance faible, et une mise à jour rapide du post-filtre $W(p,\omega_q)$, qui assure une poursuite des variations temporelles des signaux mis en jeu dans la présente application. Nous utilisons pour cela un périodogramme moyenné résultant d'un lissage exponentiel qui assure ce compromis et qui se calcule simplement à l'aide des équations récursives suivantes :

$$\hat{\Phi}_{v_iv_i}(p,\omega_q) = \alpha\,\hat{\Phi}_{v_iv_i}(p\text{-}1,\omega_q) + V_i(p,\omega_q)V_i^*(p,\omega_q) \tag{47}$$

$$\hat{\Phi}_{v_iv_j}(p,\omega_q) = \alpha\,\hat{\Phi}_{v_iv_j}(p\text{-}1,\omega_q) + V_i(p,\omega_q)V_j^*(p,\omega_q) \tag{48}$$

$\alpha$ est un nombre proche de 1 qui est reliée à la constante de temps $\tau$ du lissage exponentiel par :

$$\alpha = e^{-R/(\tau Fe)} \tag{49}$$

où *Fe* est la fréquence d'échantillonnage. Notons que la somme des pondérations des deux termes du second membre des équations des estimés ci-dessus n'est pas égale à l'unité. Ceci s'explique par l'expression du post-filtre sous forme de rapport qui permet de s'affranchir de la pondération usuelle de l'un des deux termes par (1-$\alpha$).

Cette méthode d'estimation par oubli exponentiel (aussi connu sous le vocable d'estimation récursive) ne doit pas être limitative. D'autres estimateurs peuvent être utilisés (estimateur à décision dirigée, à suivi de crête, etc ).

Module d'analyse statistique:

Le module d'analyse statistique est représenté en Fig. 12.

On extrait de $W(p,\omega_q)$ grâce au module (1231) un ensemble de fréquences discrètes $F_{ocp}$. Le signal $W(p, F_{ocp})$ ainsi obtenu est alors transformé en décibels (dB) par le module (1232):

$$W_{dB}(p,F_{ocp}) = 20Log(|W(p,F_{ocp})|) \qquad (50)$$

Parmi l'ensemble des fréquences $F_{ocp}$, le taux de fréquences $\tau_{ocp}(p)$ pour lesquelles $W_{dB}(p,F_{ocp})$ dépasse un seuil *SOC* est calculé par le module (1233) :

$$\tau_{ocp}(p) = \frac{\text{nombre de fréquences dans } F_{ocp} \text{ telles que } W_{dB}(p,F_{ocp}) > SOC}{\text{taille de } F_{ocp}} \qquad (51)$$

D'autre part, on extrait en parallèle, grâce au module (1234) un ensemble de fréquences discrètes $F_{var}$ à partir de $W(p,\omega_q)$ et on les transforme en décibels (dB) dans (1235):

$$W_{dB}(p,F_{var}) = 20Log(|W(p,F_{var})|) \qquad (52)$$

On calcule alors la variance de $W_{dB}(p,F_{var})$ soit *VAR(p)* grâce à (1236).

Détecteur de signal utile :

Le détecteur de signal utile est également représenté en Fig. 12. Il reçoit les résultats statistiques $\tau_{ocp}(p)$ et *VAR(p)*.

La valeur $\tau_{ocp}(p)$ est comparé, grâce au comparateur (1241), à un seuil d'occupation fixé *STOC* qui délivre une information binaire *OP_OA(p)* :

$$OP\_OA(p) = 1 \text{ si } \tau_{ocp}(p) > STOC \qquad (53)$$

$$OP\_OA(p) = 0 \text{ si } \tau_{ocp}(p) \leq STOC \qquad (54)$$

D'autre part, la valeur *VAR(p)* est comparée, grâce au comparateur (1242) à un seuil de variance fixé *SVAR*. Le résultat de cette comparaison délivre l'information binaire *VP_VA(p)*:

$$VP\_VA(p) = 1 \text{ si } VAR(t) < SVAR \qquad (55)$$

$$VP\_VA(p) = 0 \text{ si } VAR(t) \geq SVAR \qquad (56)$$

Les deux informations binaires *OP_OA(p)* et *VP_VA(p)* sont enfin présentées à une porte logique "ET" (1243) qui délivre le signal binaire de détection de signal utile *P_A(p)* (respectivement 1 et 0 pour la présence et l'absence de signal utile):

$$P\_A(p) = OP\_OA(p) \text{ "ET" } VP\_VA(p) \qquad (57)$$

Calcul et lissage du gain G(p) :

Rappelons que la fonction de lissage du gain G(p) proposée consiste à faire décroître continûment vers une valeur fixée $S_{min}$ le gain G(p) au passage de l'état P (P_A(p) = 1) à l'état A (P_A(p) = 0) du signal de détection de signal utile P_A(p). Dans le cas inverse, le gain G(p) doit croître continûment vers une valeur $S_{max}$ que l'on fixe ici à 1 (transparence du gain en présence du signal utile).

Dans cet exemple typique, la mise en oeuvre utilise le traitement par bloc de signaux échantillonnés. Nous proposons donc de calculer et de lisser le gain G(p) tel que décrit sur la Fig. 6 à partir d'un filtrage récursif conditionné par l'état de P_A (p):

$$G(p) = \beta_P G(p\text{-}1)+(1\text{-}\beta_P)S_{max} \qquad si \qquad P\_A(p) = 1 \tag{58}$$

$$G(p) = \beta_A G(p\text{-}1)+(1\text{-}\beta_A)S_{min} \qquad si \qquad P\_A(p) = 0 \tag{59}$$

Les grandeurs $\beta_P$ et $\beta_A$, sont reliées aux constantes de temps $\tau_P$ et $\tau_A$ par les relations:

$$\beta_P = e^{-R/(\tau_P Fe)} \tag{60}$$

$$\beta_A = e^{-R/(\tau_A Fe)} \tag{61}$$

Commutation de sortie d'antenne SP_SA(p) :

La commutation de sortie d'antenne SP_SA(p) pour appliquer à $Y(p,\omega_q)$ un filtrage selon les expressions (44) ou (45) est déterminée à partir du gain lissé G(p) par comparaison à un seuil fixé ST :

$$SP\_SA(p) = 1 \text{ si } G(p)>ST \tag{62}$$

$$SP\_SA(p) = 0 \text{ si } G(p)\leq ST \tag{63}$$

*Références Bibliographiques*

[Allen 77] J.B. Allen, D.A. Berkley, J. Blauert,
"Multimicrophone signal processing technique to remove reverberation from speech signals", *J. Acoust. Soc. Am.*, vol. 62, N° 4, pp. 912-915, 1977.

[Marro 98] C. Marro, Y. Mahieux, K.U. Simmer,
"Analysis of noise reduction and dereverberation techniques based on microphone arrays with postfiltering", *IEEE Trans. on Speech and Audio Processing,* vol. 6, N° 3, pp. 240-259, May 1998.

[Simmer 92a]K.U. Simmer, P. Kuczynski, A. Wasiljeff,
"Time delay compensation for adaptive multichannel speech enhancement systems", *Proc. ISSSE-92*, Paris, France, September 1992.

[Simmer 92b] K.U. Simmer, A. Wasiljeff,
"Adaptive m:icrophone arrays for noise suppression in the frequency domain", *Proc. of the Sec. Cost 229 Work. on Adapt. Algorith. in Com.*, pp. 185-194, Bordeaux, France, 1992.

[Zelinski 88] R. Zelinski,
"A microphone array with adaptive post-filtering for noise reduction in reverberant rooms", *Proc. ICASSP-88,* pp. 2578-2581, New York, USA, 1988.

**Revendications**

**1.** Système de réception pour antenne multicapteur comprenant :

- au moins un jeu de filtres de voie ($(310_i),(710_{i,k})$ i=1..N) filtrant les signaux $X_i(t,f)$ reçus par les différents capteurs de l'antenne, ces signaux pouvant comprendre un signal utile ($S_1(t,f)$) ;
- un sommateur ((350), (750)) sommant les signaux filtrés ($V_i(t,f)$, $V_{i,k}(t,f)$, i=1..N) par les filtres de voie et fournissant un signal de sortie d'antenne Y(t,f);

- au moins un module de calcul ((320),(720)) recevant soit les signaux de capteurs et les alignant en phase soit les signaux filtrés par les filtres de voie, ledit module estimant la fonction de transfert d'un filtre optimal (W(t, f), $W_k(t,f)$) de manière à minimiser l'écart quadratique entre le signal de sortie d'antenne filtré par ledit filtre et le signal utile;

**caractérisé en ce qu'**il comprend en outre au moins un module d'analyse statistique ((330),(730)) des valeurs fréquentielles de la fonction de transfert.

2. Système de réception selon la revendication 1, **caractérisé en ce que** le module de calcul reçoit les signaux $V_i$ (t,f) et estime la fonction de transfert du filtre optimal par la formule :

$$W(t,f) = \frac{\sum_{i=1}^{N} |b_i(f)|^2 \alpha_{1,i}^2}{\gamma \left( \sum_{i=1}^{N-1} \sum_{j=i+1}^{N} b_i(f) b_j^*(f) \alpha_{1,i} \alpha_{1,j} \right)} \cdot \frac{\gamma \left( \sum_{i=1}^{N-1} \sum_{j=i+1}^{N} \hat{\Phi}_{v_i v_j}(t,f) \right)}{\sum_{i=1}^{N} \hat{\Phi}_{v_i v_i}(t,f)}$$

où $b_i(f) = a_i(f)e^{-j2\pi f\tau i}$ est la fonction de transfert du filtre de voie i débarrassée du terme de remise en phase , $\alpha_{1,i}$ est un facteur de pondération tenant compte de l'affaiblissement du signal utile arrivant aux différents capteurs
où $\Phi_{vivj}(t,f)$ est la densité interspectrale des signaux $V_i(t,f)$
$\Phi_{vivj}(t,f)$ est la densité spectrale des signaux $V_i(t,f)$ et
$\gamma(.) = Re(.)$ ou $|.|$

3. Système de réception selon la revendication 1, **caractérisé en ce que** le module de calcul reçoit les signaux $X_i$ (t,f) et estime la fonction de transfert du filtre optimal par la formule :

$$\hat{W}(f) = \frac{2}{N-1} \cdot \frac{\gamma \left( \sum_{i=1}^{N-1} \sum_{j=i+1}^{N} \hat{\Phi}_{v_i v_j}(f) \right)}{\sum_{i=1}^{N} \hat{\Phi}_{v_i v_i}(f)}$$

$\Phi_{vivj}(t,f)$ est la densité interspectrale des signaux $X_i(t,f)$
$\Phi_{vivi}(t,f)$ est la densité spectrale des signaux $X_i(t,f)$ et
$\gamma(.) = Re(.)$ ou $|.|$

4. Système de réception selon l'une des revendications 1 à 3, **caractérisé en ce que** le module d'analyse statistique comprend :

- un premier moyen de calcul ((531),(532),(533), (931$_k$),(932$_k$),(933$_k$)) du taux d'occupation des valeurs fréquentielles de la fonction de transfert du filtre optimal ((W(t,f)) au dessus d'une première va.leur de seuil (SOC); et/ou
- un second moyen de calcul ((534),(535),(536),(934$_k$),(935$_k$),(936$_k$)) de la variance (VAR(t))des valeurs fréquentielles de la fonction de transfert (W(t,f)) et

fournit ledit taux d'occupation et ladite variance comme résultats (STAT(t), STAT$_k$(t)) d'analyse statistique.

5. Système de réception selon la revendication 1 ou 4 ne comprenant qu'un jeu de filtre de voies, **caractérisé en ce que** le module de calcul (320) reçoit les signaux $V_i(t,f)$ ainsi que le signal de sortie d'antenne Y(t,f) et estime la fonction de transfert du filtre optimal par la formule :

$$W(t,f) = \frac{\gamma\left(\sum_{i=1}^{N-1}\sum_{j=i+1}^{N}\hat{\phi}_{i,v_j}(t,f)\right)}{\gamma\left(\sum_{i=1}^{N-1}\sum_{j=i+1}^{N}b_i(f)b_j^*(f)\alpha_{1,i}\alpha_{1,j}\right)\Psi_{YY}(t,f)}$$

où $b_i(f) = a_i(f)e^{-j2\pi f\tau i}$ est la fonction de transfert du filtre de voie i débarrassée du terme de remise en phase ;

$\alpha_{1,i}$ est un facteur de pondération tenant compte de l'affaiblissement du signal utile arrivant aux différents capteurs ;

$\Phi_{vivj}(t,f)$ est la densité interspectrale des signaux $V_i(t,f)$ ;

$\Psi_{YY}(t,f)$ est la densité spectrale du signal $Y(t,f)$ ;

$\gamma(.) = Re(.)$ ou $|.|$

6. Système de réception selon l'une des revendications précédentes ne comprenant qu'un jeu de filtres de voie, **caractérisé en ce qu'**il comprend un détecteur de présence de signal utile (340) recevant les résultats (STAT(t)) du module d'analyse statistique et fournissant un indicateur de présence/ absence de signal utile (P_A(t)).

7. Système de réception selon les revendications 4 et 6, **caractérisé en ce que** le détecteur de présence de signal utile comprend un troisième comparateur (541) comparant le taux d'occupation à un taux minimal (STOC) et/ou un quatrième comparateur (542) comparant la variance à une valeur critique (SVAR), le signal P_A(t) indiquant la présence d'un signal utile si le taux d'occupation excède le taux minimal et/ou la variance est inférieure à la valeur critique ou bien selon une combinaison de ces deux critères.

8. Système de réception selon l'une des revendications 1 à 4 comportant K jeux de filtres de voies ($(710_{i,k})$, i=1..N, k=1..K) avec K>1, chaque jeu correspondant à une formation de faisceau dans une direction différente, K modules de calcul (720) de fonction de transfert de filtre optimal ($W_k(t,f)$) associés aux K jeux de filtres de voie, K modules d'analyse statistique (730) des valeurs fréquentielles des K fonctions de transfert ($W_k(t,f)$, k=1..K), **caractérisé en ce qu'**il comprend un module (780) de détermination de direction d'arrivée $m\in\{1..K\}$ du signal à partir des résultats ($STAT_k(t)$) des K modules d'analyse statistique.

9. Système de réception selon les revendications 4 et 8, **caractérisé en ce que** le module de détermination de direction d'arrivée $m\in\{1..K\}$ reçoit des K modules d'analyse statistique les taux d'occupation respectifs ($\tau_{ocp,k}(t)$) des valeurs fréquentielles des différentes fonctions de transfert de filtre optimal ($W_k(t,f)$) au dessus d'une première valeur de seuil (SOC) et/ou les variances respectives (($VAR_k(t)$) des valeurs fréquentielles des fonctions de transfert de filtre optimal ($W_k(t,f)$) ;

le module de détermination comprenant un cinquième comparateur (981) comparant lesdits taux d'occupation et/ou un sixième comparateur (984) comparant lesdites variances et sélectionnant la direction fournissant le taux d'occupation le plus élevé et/ou la variance la plus faible ou bien opérant la sélection de la direction selon une combinaison de ces deux critères.

10. Système de réception selon la revendication 8 ou 9 comprenant en outre un commutateur ((790),(890)) recevant les signaux filtrés par les K jeux de filtres de voie, sélectionnant ceux issus du jeu correspondant à la direction d'arrivée m fournie par le module de détermination de direction d'arrivée et appliquant les signaux sélectionnés au sommateur ((750),850)).

11. Système de réception selon les revendications 9 et 10, **caractérisé en ce qu'**il comprend en outre un détecteur de présence de signal utile (840) recevant du module de détermination de direction d'arrivée (880) le taux d'occupation ($\tau_{ocp,m}(t)$) le plus élevé et/ ou la variance (($VAR_k(t)$) la plus faible, le détecteur de présence de signal utile comprenant un troisième comparateur (541) comparant ledit taux d'occupation à un taux minimal et un quatrième comparateur (542) comparant ladite variance à une valeur critique et fournissant un indicateur de présence/ absence de signal utile (P_A(t)) indiquant une présence de signal utile lorsque le taux d'occupation le plus élevé excède le taux minimal (STOC) et/ou la variance la plus faible est inférieure à la valeur critique (SVAR) ou bien selon une combinaison de ces deux critères.

12. Système de réception selon la revendication 10 ou 11, **caractérisé en ce que** le module de détermination de direction d'arrivée (880) reçoit les fonctions de transfert de filtre optimal $W_k(t,f)$ et sélectionne la fonction de transfert

$W_m(t,f)$.

**13.** Système de réception selon la revendication 7 ou 12, **caractérisé en ce qu'**il comprend en outre

un post-filtre ((463),(863)) dont la fonction de transfert est celle du filtre optimal, $W(t,f)$, ou en cas de pluralité de modules de calcul celle du filtre optimal, $W_m(t,f)$;

un atténuateur ((462),(862)) de gain constant ($G_{SA}$) ;

un commutateur ((460),(860)) appliquant le signal de sortie d'antenne $Y(t,f)$ soit au post-filtre soit à l'atténuateur en fonction d'un signal de commutation (SP_SA(t)).

**14.** Système de réception selon la revendication 13, **caractérisé en ce qu'**il comprenant en outre :

un amplificateur de gain variable ((464),(864)) dont l'entrée est connectée à la sortie commune du post-filtre et de l'atténuateur de gain constant,

un générateur de gain variable ((470),(870)) recevant l'indicateur de présence/absence de signal utile et fournissant à l'entrée de gain de l'amplificateur de gain variable un signal de gain lissé $G(t)$;

un comparateur ((461),(861)) comparant le signal de gain lissé $G(t)$ à un seuil (ST) et dont la sortie fournit le signal de commutation (SP_SA(t)).

**15.** Système de réception selon la revendication 14, **caractérisé en ce que** le générateur de gain variable comprend un filtre passe-bas à constante de temps commutable et que

lorsque l'indicateur indique une présence, une première valeur $S_{max}$ est appliquée à son entrée et une première constante de temps est sélectionnée ;

lorsque l'indicateur indique une absence, une seconde valeur $S_{min}$ est appliquée à son entrée et une seconde constante de temps est sélectionnée.

**16.** Système de réception selon l'une des revendications précédentes, **caractérisée en ce que** les filtres de voies sont optimisés de manière à maximiser le facteur de directivité défini par :

$$Fd(f) = \frac{\sum_{i=1}^{N} b_i(f)\alpha_{1,i}}{\frac{1}{4\pi} \iint\limits_{\varphi\;\theta} \left| \sum_{i=1}^{N} b_i(f)\alpha_{2,i} e^{j2\pi f \frac{d_{1,i}-d_{2,i}}{c}} \right|^2 \sin\theta \; d\varphi \; d\theta}$$

où $b_i(f) = a_i(f)e^{-j2\pi f\tau i}$ est la fonction de transfert du filtre de voie i débarrassé du terme de remise en phase ;

$\alpha_{1,i}$ et $\alpha_{2,i}$ sont des facteurs de pondération tenant compte des affaiblissements respectifs du signal utile $S_1(t,f)$ et d'un signal parasite quelconque arrivant aux différents capteurs $C_i$ après des distances respectives $d_{1,i}$ et $d_{2,i}$.

**17.** Système de réception selon la revendication 16, **caractérisé en ce que** le facteur de directivité est maximisé en minimisant l'expression $\mathbf{b}(f)\mathbf{D}(f)\mathbf{b}^H(f)$ où $\mathbf{b}(f)$ est le vecteur $(b_i(f))$ et

$$D(f) = 1/4\pi \int \int |\; \alpha_2(f)\; \alpha_2^H(f)\; \sin\theta\; d\varphi\; d\theta$$

sous les contraintes $|\mathbf{b}^H(f)\alpha_1(f)| = 1$ et $\mathbf{b}(f)\mathbf{b}^H(f) < 1/G_{min}(f)$

$\alpha_1$ et $\alpha_2$ étant les vecteurs $(\alpha_{1,i})$ et $(\alpha_{2,i})$ respectivement

$G_{min}(f)$ fixant la valeur minimale de réduction de bruit incohérent

**18.** Système de réception selon l'une des revendications 13 à 15, **caractérisé en ce que** les filtres de voie et le post-filtre sont optimisés conjointement en minimisant une combinaison linéaire de l'expression $\mathbf{b}(f)\mathbf{D}(f)\mathbf{b}^H(f)$ où $b(f)$ est le vecteur $(b_i(f))$ et $\mathbf{D}(f) = 1/4\pi \int \int \alpha_2(t)\; \alpha_2^H(f)\; \sin\theta\; d\varphi\; d\theta$.

**Claims**

1. A reception system for a multisensor antenna comprising:

   - at least one channel filter set $(310_i)$, $(710_{i,k})$ i=1..N), filtering signals $X_i(t,f)$ received by the various sensors of the antenna, these signals being able to include a wanted signal $(S_1(t,f))$;
   - a summing integrator $((350,(750)))$ summing the filtered signals $(V_i(t,f)$, $V_{i,k}(t,f)$, i=1..N) by the channel filters and supplying an antenna output signal $Y(t,f)$;
   - at least one calculation module $((320),(720))$, receiving either the sensor signals and aligning them in phase, or signals filtered by the channel filters the said module estimating the transfer function of an optimal filter $(W(t,f)$, $W_k(t,f)$ so as to minimise the quadratic deviation between the output signal of the filtered antenna by the said filter and the wanted signal;

   **characterised in that** it further comprises at least one statistical analysis module $((330),(730))$ of the frequential values of the transfer function.

2. A reception system in accordance with claim 1, **characterised in that** the calculation module receives signals $V_i(t,f)$ and estimates the transfer function of the optimal filter using the formula:

$$W(t,f) = \frac{\sum_{i=1}^{N}|b_i(f)|^2 \alpha_{1,i}^2}{\gamma\left(\sum_{i=1}^{N-1}\sum_{j=i+1}^{N}b_i(f)b_j^*(f)\alpha_{1,i}\alpha_{1,j}\right)} \cdot \frac{\gamma\left(\sum_{i=1}^{N-1}\sum_{j=i+1}^{N}\hat{\Phi}_{v_iv_j}(t,f)\right)}{\sum_{i=1}^{N}\hat{\Phi}_{v_iv_i}(t,f)}$$

   where $b_i(f)=a_i(f)e^{-j2\pi fti}$ is the transfer function of channel filter i cleared at the end of rephasing;
   $\alpha_{1,i}$ is a weighting factor, taking account of the weakness of the wanted signal arriving at the various sensors
   where $\Phi_{v_iv_j}(t,f)$ is the interspectral signal density of signals $V_i(t,f)$
   $\Phi_{v_iv_i}(t,f)$ is the spectral density of signals $V_i(t,f)$ and
   $\gamma(.)=Re(.)$ or $|.|$

3. A reception system in accordance with claim 1, **characterised in that** the calculation module receives signals $X_i(t,f)$ and estimates the transfer function of the optimal filter using the formula:

$$\hat{W}(f) = \frac{2}{N-1} \cdot \frac{\gamma\left(\sum_{i=1}^{N-1}\sum_{j=i+1}^{N}\hat{\Phi}_{v_iv_j}(f)\right)}{\sum_{i=1}^{N}\hat{\Phi}_{v_iv_i}(f)}$$

   where:

   $\Phi_{v_iv_j}(t,f)$ is the interspectral density of signals $X_i(t,f)$
   $\Phi_{v_iv_i}(t,f)$ is the spectral density of signals $X_i(t,f)$ and
   $\gamma(.)=Re(.)$ or $|.|$

4. A reception system in accordance with one of claims 1 to 3, **characterised in that** the statistical analysis module includes:

   - an initial means of calculation $((531),(532),(533),(931_k),(932_k),(933_k))$ of the occupation levels of the frequential values of the transfer function of the optimal filter $((W(t,f))$ above an initial threshold value (SOC); and/or

- a second means of calculation ((534),(535),(536),(934$_k$),(935$_k$),(936$_k$)) of the variance (VAR(t)) of the frequential values of the transfer function (W(t,f)) and supplies the said occupation level and the said variance as statistical analysis results (STAT(t), STAT$_k$(t)).

5. A reception system in accordance with claim 1 or 4 comprising only one channel filter set, **characterised in that** calculation module (320) receives signals V$_i$(t,f) as well as the output signal from antenna Y(t,f) and estimates the transfer function of the optimal filter using the formula:

$$W(t,f) = \frac{\gamma\left(\sum_{i=1}^{N-1}\sum_{j=i+1}^{N}\hat{\phi}_{v_i v_j}(t,f)\right)}{\gamma\left(\sum_{i=1}^{N-1}\sum_{j=i+1}^{N}b_i(f)b_j(f)\alpha_{1,i}\alpha_{1,j}\right)\psi_{YY}(t,f)}$$

where $b_i(f)=a_i(f)e^{-j2\pi f\tau i}$ is the transfer function of the cleared channel i. at the end rephasing;
$\alpha_{1,i}$ is a weighting factor, taking the weakness of the wanted signal arriving at the various sensors into account;
$\Phi_{v_i v_j}(t,f)$ is the interspectral density of signals V$_i$(t,f):
$\psi_{YY}(t,f)$ is the spectral density of signal Y(t,f);
$\gamma(.)=Re(.)$ or .

6. A reception system in accordance with one of the preceding claims including only one channel filter set, **characterised in that** it includes a detector for the presence of a wanted signal (340) receiving the (STAT(t)) results of the statistical analysis module and providing an indicator of the presence/absence of a wanted signal (P_A(t)).

7. A reception system in accordance with claims 4 and 6, **characterised in that** the detector of the wanted signal presence includes a third comparator (541), comparing the degree of occupation at a minimal level (STOC) and/ or a fourth comparator (542) comparing the variance to a critical value (SVAR), the P_A(t) signal indicating the presence of a wanted signal if the level of occupation exceeds the minimal level and/or the variance is less than the critical value or indeed according to the combination of these two criteria.

8. A reception system in accordance with one of claims 1 to 4, comprising K channel filter sets ((710$_{i,k}$), i=1..N, k=1.. K) with K>1, each set corresponding to a beam formation in a different direction, K calculation modules (720) of optimal filter transfer function (W$_k$(t,f)) associated with K channel filter sets and K statistical analysis modules (730) of frequential values of the K transfer functions (W$_k$(,f), k=1..K), **characterised in that** it includes a module (780) for the determination of the direction of arrival m ε {1..K} of the signal from the results (STAT$_k$(t)) of the K statistical analysis modules.

9. A reception system in accordance with claims 4 and 8, **characterised in that** the determination module for the direction of arrival m ε {1..K} receives from the K statistical analysis modules, the respective levels of occupation ($\tau_{ocp.k}$(t)) of the frequential values of the various optimal filter transfer functions (W$_k$(t,f)) above an initial threshold value (SOC) and/or respective variances ((VAR$_k$(t)) of the frequential values of the transfer functions of the optimal filter transfer (W$_k$(t,f));
the determination module includes a fifth comparator (981), comparing the said occupation levels and/or a sixth comparator (984) comparing the said variances and selecting the direction supplying the highest occupation level and/or the lowest variance or indeed operating the selection of direction according to a combination of these two criteria.

10. A reception system in accordance with claims 8 or 9 including furthermore a commutator ((790),(890)), receiving signals filtered by K channel filter sets, selecting those stemming from the set corresponding to the arrival direction m supplied by the arrival direction determination module and applying the selected signals to the summing integrator ((750,850)).

11. A reception system in accordance with claims 9 and 10, **characterised in that** it further comprises a detector of the presence of a wanted signal (840), receiving from the determination module the direction of arrival (880), the highest level of occupation $(\tau_{ocp.m}(t))$ and/or the lowest variance $((VAR_k(t))$, the detector of the presence of a wanted signal including a third comparator (541), comparing the said level of occupation to a minimal level and a fourth comparator (542), comparing the said variance to a critical value and supplying an indicator of the presence/absence of the wanted signal (P_A(t)), indicating a presence of a wanted signal when the highest level of occupation exceeds the minimal level (STOC) and/or when the lowest variance is below the critical value (SVAR) or indeed according to a combination of these two criteria.

**12.** A reception system in accordance with claims 10 or 11, **characterised in that** the determination module of the direction of arrival (880) receives the optimal filter transfer functions $W_k(t,f)$ and selects the transfer function $W_m(t,f)$.

**13.** A reception system in accordance with claims 7 or 12, **characterised in that** it further comprises:

a post-filter ((463),(863)) the transfer function of which is that of the optimal filter, W(t,f) or, in the case of a number of calculation modules, that of the optimal filter $W_m(t,f)$;
an attenuator ((462),(862)) of constant gain ($G_{SA}$);
a switch ((460),(860)), applying the output signal of antenna Y(t,f) either to the post-filter or to the attenuator according to a commutation signal (SP_SA(t)).

**14.** A reception system in accordance with claim 13, **characterised in that** it further comprises:

a variable gain amplifier ((464),(864)) the input of which is connected to the common
output of the post-filter and of the constant gain attenuator;
a variable gain generator ((470),(870) receiving the indicator of the presence/absence of the wanted signal and providing a smooth gain signal G(t) at the gain input of the variable gain amplifier;
a comparator ((461),(861)), comparing the smooth gain signal G(t) to a threshold (ST) the output of which supplies the commutation signal (SP_SA(t)).

**15.** A reception system in accordance with claim 14, **characterised in that** the variable gain generator includes a switching constant time low-pass filter and that
when the indicator indicates a presence, an initial value $S_{max}$ is applied on input and an initial time constant is selected;
when the indicator indicates an absence, a second value $S_{min}$ is applied at input and a second time constant is selected.

**16.** A reception system in accordance with one of the preceding claims, **characterised in that** the channel filters are optimised in order to maximise the directivity factor defined as:

$$Fd(f) = \frac{\sum_{i=1}^{N} b_i(f)\alpha_{1,i}}{\frac{1}{4\pi} \iint\limits_{\varphi,\theta} \left| \sum_{i=1}^{N} b_i(f)\alpha_{2,i} e^{j2\pi f \frac{d_{1,i}-d_{2,i}}{c}} \right|^2 \sin\theta \, d\varphi \, d\theta}$$

where $b_i(f)=a_i(f)e^{-j2\pi f\tau i}$ is the transfer function of the channel filter i cleared at the end of rephasing;
$\alpha_{1,i}$ and $\alpha_{2,i}$ are weighting factors taking the respective attenuation of the wanted signal $S_1(t,f)$ and of whatever spurious signals arriving at the various sensors $C_i$ into account after distances of $d_{1,i}$ and $d_{2,i}$ respectively.

**17.** A reception system in accordance with claim 16, **characterised in that** the directivity factor is maximised and minimising the expression $\mathbf{b}(f)\mathbf{D}(f)\mathbf{b}^H(f)$ where $\mathbf{b}(f)$ is the vector ($b_i(f)$) and

$$D(f) = 1/4\pi \int \int \alpha_2(f) \, \alpha_2^H(f) \sin\theta \, d\varphi \, d\theta$$

under the constraints $\mathbf{b}^H(f)\alpha_1(f) = 1$ and $\mathbf{b}(f)\mathbf{b}^H(f) < 1/G_{min}(f)$

$\alpha_1$ and $\alpha_2$ being the vectors $(\alpha_{1,i})$ and $(\alpha_2)$ respectively
$G_{min}$ fixing the minimal incoherent noise reduction

18. A reception system in accordance with one of claims 13 to 15, **characterised in that** the channel filters and the post-filter are jointly optimised by minimising a linear combination of the expression $\mathbf{b}(f)\mathbf{D}(f)\mathbf{b}^H(f)$, where $\mathbf{b}(f)$ is the vector $(b_i(f))$ and $\mathbf{D}(f)= 1/4\pi \int \int \alpha_2(f) \, \alpha_2^H(f) \sin\theta \, d\varphi \, d\theta$.

**Patentansprüche**

1. Empfangssystem für Metirfachempfänger-Antenne mit:

   - mindesten einem Satz Kanalfilter $((310_i), (710_{ik})$ i=1..N), der die von den verschiedenen Sensoren der Antenne empfangenen Signale $(X_i(t,f)$ filtert, wobei diese Signale ein Nutzsignal $(S_1(t,f))$ umfassen können;
   - einem Summierer $((350), (V750)$, der die durch die Kanalfilter gefilterten Signale $(V_i(t,f), V_{ik}(t,f),$ i=1..N) summiert und ein Antennenausgangssignal $Y(t,f)$ liefert;
   - mindestens einem Rechenmodul $((320), (720))$, das entweder die Signale von Sensoren empfängt und sie in Phase ausrichtet, oder die von den Kanalfiltern gefilterten Signale, wobei das Modul die Transferfunktion eines optimalen Filters $(W(t,f), W_k(t,f))$ derart schätzt, dass der quadratische Abstand zwischen dem von dem Filter gefilterten Antennenausgangssignal und dem Nutzsignal minimiert wird,

   **dadurch gekennzeichnet, dass** es ferner mindestens ein Modul zur statistischen Analyse $((330),(730))$ der Frequenzwerte der Transferfunktion umfasst.

2. Empfangssystem nach Anspruch 1, **dadurch gekennzeichnet, dass** das Rechenmodul die Signale $V_i(t,f)$ empfängt und die Transferfunktion des optimalen Filters anhand folgender Formel schätzt:

$$W(t,f)=\frac{\sum_{i=1}^{N}|b_i(f)|^2\alpha_{1,i}^2}{\gamma\left(\sum_{i=1}^{N-1}\sum_{j=i+1}^{N}b_i(f)b_j(f)\alpha_{1,i}\alpha_{1,j}\right)}\cdot\frac{\gamma\left(\sum_{i=1}^{N-1}\sum_{j=i+1}^{N}\hat{\Phi}_{v_iv_j}(t,f)\right)}{\sum_{i=1}^{N}\hat{\Phi}_{v_iv_i}(t,f)}$$

wobei $b_i(f)=a_i(f)e^{-j2\pi f\tau i}$ die Transferfunktion des Filters des Kanals i ist, der des Glieds der Phasenlagewiedereinstellung entledigt ist;
$\alpha_{1,i}$ ein Gewichtungsfaktor ist, der die Schwächung des Nutzsignals berücksichtigt, das an den verschiedenen Sensoren eintrifft;
wobei $\Phi_{v_iv_j}(t,f)$ die interspektrale Dichte der Signale $V_i(t,f)$ ist,
$\Phi_{v_iv_i}(t,f)$ die spektrale Dichte der Signale $V_i(t,f)$ und $\gamma(.)=\mathrm{Re}(.)$ oder $|.|$ ist.

3. Empfangssystem nach Anspruch 1, **dadurch gekennzeichnet, dass** das Rechenmodul die Signale $X_i(t,f)$ empfängt und die Transferfunktion des optimalen Filters mit folgender Formel schätzt:

$$\hat{W}(f)=\frac{2}{N-1}\cdot\frac{\gamma\left(\sum_{i=1}^{N-1}\sum_{j=i+1}^{N}\hat{\Phi}_{v_iv_j}(f)\right)}{\sum_{i=1}^{N}\hat{\Phi}_{v_iv_i}(f)}$$

wobei $\Phi_{v_iv_j}(t,f)$ die interspektrale Dichte der Signale $X_i(t,f)$ ist,
$\Phi_{v_iv_i}(t,f)$ die spektrale Dichte der Signale $X_i(t,f)$ und
$\gamma(.)=\mathrm{Re}(.)$ oder $|.|$ ist.

4. Empfangssystem nach einem der Ansprüche 1 bis 3, **dadurch gekennzeichnet, dass** das Modul zur statistischen Analyse Folgendes umfasst:

- ein erstes Mittel zum Berechnen ((531), (532), (533), $(931_k)$, $(932_k)$, $(933_k)$) des Belegungsprozentsatzes der Frequenzwerte der Transferfunktion des optimalen Filters ((W(t,f)) über einem ersten Schwellenwert (SOC); und/oder
- ein zweites Mittel zum Berechnen ((534), (535), (536) , $(934_k)$, $(935_k)$, $(936_k)$) der Varianz (VAR(t)) der Frequenzwerte der Transferfunktion (W(t,f)) und

den Belegungsprozentsatz und die Varianz als Ergebnisse (STAT(t), $STAT_k$(t)) der statistischen Analyse liefert.

5. Empfangssystem nach Anspruch 1 oder 4, das nur einen Satz Kanalfilter umfasst, **dadurch gekennzeichnet, dass** dieses Rechenmodul (320) die Signale $V_i$(t,f) sowie das Antennenausgangssignal Y(t,f) empfängt und die Transferfunktion des optimalen Filters mit der folgenden Formel schätzt:

$$W(t,f) = \frac{\gamma\left(\sum_{i=1}^{N-1}\sum_{j=i+1}^{N}\hat{\phi}_{i,v_j}(t,f)\right)}{\gamma\left(\sum_{i=1}^{N-1}\sum_{j=i+1}^{N}b_i(f)b_j^*(f)\alpha_{1,i}\alpha_{1,j}\right)\Psi_{YY}(t,f)}$$

wobei $b_i(f)=a_i(f)e^{-j2\pi f\tau i}$ die Transferfunktion des Filters des Kanals i ist, der des Glieds der Phasenlagewiedereinstellung entledigt ist;
$\alpha_{1,i}$ ein Gewichtungsfaktor ist, der die Schwächung des Nutzsignals berücksichtigt, das an den verschiedenen Sensoren eintrifft;
$\Phi_{vivj}$(t,f) die interspektrale Dichte der Signale $V_i$(t,f) ist;
$\Psi_{YY}$(t,f) die spektrale Dichte des Signals Y(t,f) ist; $\gamma(.)=Re(.)$ oder $|.|$ ist.

6. Empfangssystem nach einem der vorhergehenden Ansprüche, das nur einen Kanalfiltersatz umfasst, **dadurch gekennzeichnet, dass** es einen Detektor der Gegenwart des Nutzsignals (340) umfasst, der die Ergebnisse (STAT (t)) des Moduls zur statistischen Analyse empfängt und einen Indikator für die Gegenwart/Abwesenheit des Nutzsignals (P_A(t)) liefert.

7. Empfangssystem nach den Ansprüchen 4 und 6, **dadurch gekennzeichnet, dass** der Detektor der Gegenwart des Nutzsystems einen dritten Komparator (541) umfasst, der den Belegungsprozentsatz mit einem Mindestprozentsatz (STOC) vergleicht, und/oder einen vierten Komparator (542), der die Varianz mit einem kritischen Wert (SVAR) vergleicht, wobei das Signal P_A(t) die Gegenwart eines Nutzsignals anzeigt, wenn der Belegungsprozentsatz den Mindestprozentsatz übersteigt und/oder die Varianz geringer ist als der kritische Wert oder nach einer Kombination dieser zwei Kriterien.

8. Empfangssystem nach einem der Ansprüche 1 bis 4, das K Sätze Kanalfilter $((710_{i,k})$, i=1...N, k=..K) mit K>1 umfasst, wobei jeder Satz einer Bündelbildung in eine andere Richtung entspricht, K Rechenmodule (720) für die Transferfunktion des optimalen Filters $(W_k$(t,f)), die den K Kanalfiltersätzen zugeordnet sind, K Module zur statistischen Analyse (730) der Frequenzwerte der K Transferfunktionen $(W_k$(t,f), k=1..K), **dadurch gekennzeichnet, dass** es ein Modul (780) zum Bestimmen der Ankunftsrichtung m∈{1..K} des Signals ausgehend von den Ergebnissen $(STAT_k$(t)) der K statistischen Analysemodule umfasst.

9. Empfangssystem nach den Ansprüchen 4 und 8, **dadurch gekennzeichnet, dass** das Modul zum Bestimmen der Ankunftsrichtung m∈{1..K} von den K Modulen zur statistischen Analyse die jeweiligen Belegungsprozentsätze *($\tau_{ocp.k}$(t))* der Frequenzwerte der verschiedenen Transferfunktionen des optimalen Filters $(W_k$(t,f)) über einem ersten Schwellenwert (SOC) und/oder die jeweiligen Varianzen $(VAR_k$(t)) der Frequenzwerte der Transferfunktionen des optimalen Filters $(W_k$(t,f)) empfängt;
wobei das Modul zum Bestimmen einen fünften Komparator (981) umfasst, der die Belegungsprozentsätze vergleicht, und/oder einen sechsten Komparator (984), der die Varianzen vergleicht und die Richtung auswählt, die den höchsten Belegungsprozentsatz und/oder die geringste Varianz liefert oder die Auswahl der Richtung nach einer Kombination dieser zwei Kriterien durchführt.

**10.** Empfangssystem nach Anspruch 8 oder 9, das ferner einen Umschalter ((790), (890)) umfasst, der die von den K Kanalfiltersätzen gefilterten Signale empfängt, die auswählt, die aus dem Satz stammen, der der Ankunftsrichtung m entspricht, die von dem Modul zum Bestimmen der Ankunftsrichtung geliefert wird, und die ausgewählten Signale auf den Summierer ((750), (850)) anlegt.

**11.** Empfangssystem nach den Ansprüchen 9 und 10, **dadurch gekennzeichnet, dass** es ferner einen Detektor zum Erfassen der Gegenwart des Nutzsignals (840) umfasst, der vom Modul zum Bestimmen der Ankunftsrichtung (880) den höchsten Belegungsprozentsatz $(\tau_{ocp.k}(t))$ und/oder die niedrigste Varianz $(VAR_k(t))$ empfängt, wobei der Detektor der Gegenwart des Nutzsignals einen dritten Komparator (541) umfasst, der den Belegungsprozentsatz mit einem Mindestprozentsatz vergleicht, und einen vierten Komparator (542), der die Varianz mit einem kritischen Wert vergleicht und einen Indikator der Gegenwart/Abwesenheit des Nutzsignals (P_A(t)) liefert, der eine Nutzsignalgegenwart anzeigt, wenn der höchste Belegungsprozentsatz den Mindestprozentsatz (STOC) übersteigt und/oder wenn die niedrigste Varianz geringer ist als der kritische Wert (SVAR) oder nach einer Kombination dieser zwei Kriterien.

**12.** Empfangssystem nach Anspruch 10 oder 11, **dadurch gekennzeichnet, dass** das Modul zur Bestimmung der Ankunftsrichtung (880) die Transferfunktionen des optimalen Filters $W_k(t,f)$ empfängt und die Transferfunktion $W_m$ (t,f) auswählt.

**13.** Empfangssystem nach Anspruch 7 oder 12, **dadurch gekennzeichnet, dass** es ferner Folgendes umfasst:

ein Nachfilter ((463), (863)), dessen Transferfunktion die des optimalen Filters W(t,f) ist, oder, im Falle der Vielzahl der Rechenmodule, die des optimalen Filters $W_m(t,f)$;

einen Dämpfer ((462), (862)) mit konstanter Verstärkung ($G_{SA}$);

einen Umschalter ((460), (860)), der das Antennenausgangssignal Y(t,f) in Abhängigkeit von einem Umschaltsignal (SP_SA(t)) entweder an das Nachfilter oder an den Dämpfer anlegt.

**14.** Empfangssystem nach Anspruch 13, **dadurch gekennzeichnet, dass** es ferner Folgendes umfasst:

einen Verstärker mit veränderlicher Verstärkung ((464), (864)), dessen Eingang an den gemeinsamen Ausgang des Nachfilters und des Dämpfers mit konstanter Verstärkung angeschlossen ist;

einen Generator mit veränderlicher Verstärkung ((470), (870)), der den Indikator der Gegenwart/Abwesenheit des Nutzsignals empfängt und an den Verstärkungseingang des Verstärkers mit veränderlicher Verstärkung ein geglättetes Verstärkungssignal G(t) liefert;

einen Komparator ((461), (861)), der das geglättete Verstärkungssignal G(t) mit einem Schwellenwert (ST) vergleicht, dessen Ausgang das Umschaltsignal (SP_SA(t)) liefert.

**15.** Empfangssystem nach Anspruch 14, **dadurch gekennzeichnet, dass** der Generator mit veränderlicher Verstärkung ein Tiefpassfilter mit umschaltbarer Zeitkonstante umfasst, und dass
wenn der Indikator eine Gegenwart anzeigt, ein erster Wert $S_{max}$ an seinen Eingang angelegt und eine erste Zeitkonstante ausgewählt wird;
wenn der Indikator eine Abwesenheit anzeigt, ein zweiter Wert $S_{min}$ an seinen Eingang angelegt und eine zweite Zeitkonstante ausgewählt wird.

**16.** Empfangssystem nach einem der vorhergehenden Ansprüche, **dadurch gekennzeichnet, dass** die Kanalfilter derart optimiert sind, dass sie den Richtwirkungsfaktor maximieren, der definiert wird von:

$$Fd(f) = \frac{\sum_{i=1}^{N} b_i(f)\alpha_{1,i}}{\frac{1}{4\pi}\iint_{\varphi\;\theta}\left|\sum_{i=1}^{N} b_i(f)\alpha_{2,i}e^{j2\pi f\frac{d_{1,i}-d_{2,i}}{c}}\right|^2 \sin\theta\cdot d\varphi\,d\theta}$$

wobei $b_i(f)=a_i(f)e^{-j2\pi f\tau i}$ die Transferfunktion des Filter des Kanals i ist, der des Glieds der Phasenlagewiedereinstellung entledigt ist;

$\alpha_{1,i}$ und $\alpha_{2,i}$ Gewichtungsfaktoren sind, die die Schwächungen des Nutzsignals $S_1(t,f)$ und eines beliebigen Störsignals, die an den verschiedenen Sensoren $C_i$ nach den jeweiligen Entfernungen $d_{1,i}$ und $d_{2,i}$ eintreffen, berücksichtigen.

17. Empfangssystem nach Anspruch 16, **dadurch gekennzeichnet, dass** der Richtwirkungsfaktor maximiert wird, indem der Ausdruck $\mathbf{b}(f)\mathbf{D}(f)\mathbf{b}^H(f)$ minimiert wird, wobei b(f) der Vektor $(b_i(f))$ ist, und

$$D(f) = 1/4\pi \int \int| \alpha_2(f)\alpha_2^H(f) \sin\theta\ d\varphi\ d\theta$$

unter den Auflagen $| \mathbf{b}^H(f)\alpha_1(f)| = 1$ und $\mathbf{b}(f)\mathbf{b}^H(f)< 1/G_{min}(f)$
wobei $\alpha_1$ und $\alpha_2$ jeweils die Vektoren $(\alpha_{1,i})$ und $(\alpha_{2,i})$ sind,
wobei $G_{min}(f)$ den Mindestwert der Reduzierung inkohärenten Rauschens festlegt.

18. Empfangssystem nach einem der Ansprüche 13 bis 15, **dadurch gekennzeichnet, dass** die Kanalfilter und das Nachfilter gemeinsam optimiert sind, indem eine lineare Kombination des Ausdrucks $\mathbf{b}(f)\mathbf{D}(f)\mathbf{b}^H(f)$ minimiert wird, wobei $\mathbf{b}(f)$ der Vektor $(b_i(f))$ ist und $\mathbf{D}(f) = 1/4\pi \int \int| \alpha_2(f)\alpha_2^H(f) \sin\theta\ d\varphi\ d\theta$.

$$\underline{FIG.1}$$

$$\underline{FIG.2}$$

FIG.3

FIG.4

EP 1 277 372 B1

530

531 $W(t,F_{ocp})$ 532 $W_T(t,F_{ocp})$ 533

540

541 $\tau_{ocp}(t) > STOC$

$T_{ocp}(t)$

543 $OP\_OA(t)$

$W(t,f)$

& $P\_A(t)$

534 $W(t,F_{var})$ 535 $W_T(t,F_{var})$ 536

$VP\_VA(t)$ 542

$VAR(t)$ $VAR(t) < SVAR$

## FIG.5

$P\_A(t)$ 670

671 672 674

$S_{max}$ $P$ $P$ $G(t)$

$S_{min}$ $A$ 673 $A$

## FIG.6

FIG.7

FIG.8

FIG.9

$$\text{FIG.10}$$

EP 1 277 372 B1

FIG.11

FIG.12

37